# EUROPEAN PATENT SPECIFICATION

(11) **EP 4 546 734 B1**
(45) Date of publication and mention of the grant of the patent: **11.03.2026**
(21) Application number: 24199817.8
(22) Date of filing: 11.09.2024
(51) Int. Cl.: H04L 41/0631, H04L 41/0686, H04L 41/16, H04L 41/5074, H04W 24/02, H04W 24/04

(54) **MULTI-MODEL SWITCHING AND DISTRIBUTED MULTI-STAGE MACHINE LEARNING TO ENHANCE FIELD DIAGNOSTICS AND SERVICES**
MULTIMODELLUMSCHALTUNG UND VERTEILTES MEHRSTUFIGES MASCHINENLERNEN ZUR VERBESSERUNG VON FELDDIAGNOSE UND DIENSTEN
COMMUTATION MULTI-MODÈLES ET APPRENTISSAGE AUTOMATIQUE MULTI-ÉTAGE DISTRIBUÉ POUR AMÉLIORER DES DIAGNOSTICS ET DES SERVICES DE CHAMP

(30) Priority: 27.10.2023 US 202318496346
(43) Date of publication of application: 30.04.2025
(73) Proprietor: Avago Technologies International Sales Pte. Limited, Singapore 768923 (SG)
(72) Inventor: Li, Gordon, San Diego, 92127 (US); Chen, Xuemin, Rancho Santa Fe, 92067 (US)
(74) Representative: Dilg, Haeusler, Schindelmann Patentanwaltsgesellschaft mbH

(56) References cited:
- CN-B- 108 804 456
- US-A1- 2023 198 869
- US-A1- 2023 316 138
- US-B1- 10 419 934
- ISLAM MUHAMMAD NAZRUL ET AL: "Exploring ChatGPT in Network Management and Monitoring: Benefits and Challenges", 2023 INTERNATIONAL CONFERENCE ON INFORMATION AND COMMUNICATION TECHNOLOGY FOR SUSTAINABLE DEVELOPMENT (ICICT4SD), IEEE, 21 September 2023 (2023-09-21), pages 346 - 351, XP034463701, [retrieved on 20231106], DOI: 10.1109/ICICT4SD59951.2023.10303476
- GODSE NEHA ATUL ET AL: "Implementation of Chatbot for ITSM Application Using IBM Watson", 2018 FOURTH INTERNATIONAL CONFERENCE ON COMPUTING COMMUNICATION CONTROL AND AUTOMATION (ICCUBEA), IEEE, 16 August 2018 (2018-08-16), pages 1 - 5, XP033539500, [retrieved on 20190423], DOI: 10.1109/ICCUBEA.2018.8697411

## Description

### Technical Field

This disclosure relates generally to providing diagnostic and service information in broadband networks and, more specifically, to employing machine learning models to enhance the provision of such information.

### Background

Current analytic systems for broadband operator network diagnostics and services are usually based on fixed analytic algorithms and data collection procedures. Furthermore, these algorithms are usually executed independently on either the local customer premises equipment (CPE), network edge devices, or the cloud. Such systems can cause frustration and confusion for users of the systems, in particular subscribers, who often might not know the proper questions to ask and/or the proper information to provide to allow the system to diagnose the problem, and who might not understand the information provided by the system, such as diagnostic information or solutions that employ overly technical information or assume deeper knowledge of the system than the subscriber might possess. Hence, there is a need for solutions that enable more effective and efficient broadband operator field diagnostics and services.

Document US 10 419 934 B1 discloses an automated chat bot for answering user requests. Document US 2023/198 869 A1 discloses a process for reporting incidents occurring at user devices. Document CN 108 804 456 B discloses a chat engine for enriching answers of user inquiries with additional information for improving user experience.

### Brief Description of the Drawings

Fig. 1 is a block diagram illustrating an exemplary broadband network, in accordance with some embodiments.
Fig. 2 is a block diagram that illustrates an information flow between various components of an exemplary system for providing field diagnostics and services, in accordance with some embodiments.
Fig. 3 is a block diagram illustrating a chat prompt and response engineering model, in accordance with some embodiments.
Fig. 4 illustrates an exemplary technique for enhancing a chat prompt and/or response, in accordance with some embodiments.
Fig. 5 is a flow diagram illustrating a process for enhancing a chat prompt and response, in accordance with some embodiments.
Fig. 6 is a block diagram illustrating an exemplary multi-head machine learning model, in accordance with some embodiments.
Fig. 7 is a block diagram illustrating an exemplary hierarchical machine learning model, in accordance with some embodiments.
Figs. 8A and 8B are block diagrams illustrating an exemplary model-hopping machine learning model, in accordance with some embodiments.
Figs. 8C and 8D illustrate exemplary backbone architectures that can be used with models of Figs. 8A and 8B, in accordance with some embodiments.
Fig. 9 is a block diagram illustrating an exemplary machine learning model for analyzing an orthogonal frequency-division multiplexing channel of a broadband network, in accordance with some embodiments.
Fig. 10 is a block diagram illustrating an exemplary machine learning model for analyzing a quadrature amplitude modulation channel of a broadband network, in accordance with some embodiments.
Fig. 11 is a block diagram illustrating an exemplary multi-model switching machine learning model operating in parallel mode, in accordance with some embodiments.
Fig. 12 is a timeline diagram illustrating a timeline for model delegation options, in accordance with some embodiments.
Fig. 13 is a block diagram illustrating an exemplary multi-model switching machine learning model operating in parallel mode using a majority voting strategy, in accordance with some embodiments.
Figs. 14-16 are block diagrams illustrating operation of exemplary multi-model switching machine learning models operating in serial mode, in accordance with some embodiments.
Fig. 17 is a block diagram illustrating example components of a computer system in accordance with some embodiments.

### Detailed Description

Some embodiments provide improved solutions that enable more effective and efficient field diagnostics and services, *e.g*., for providers of broadband (and/or other) services to customers (also referred to herein as "operators" of such networks and services). Simply put, as used herein, a "provider" is any entity that provides a service to a customer or other user. An example of a provider is a broadband provider, which, in some embodiments, provides network services (which can include without limitation, data services, Internet service provider (ISP) services, telecommunication services, television and/or streaming content service, and/or the like). Examples of broadband providers include, without limitation, cable television providers, ISPs, satellite television providers, telephone service providers, and/or the like. In an aspect, some embodiments can enable users to better communicate with the provider to obtain, *inter alia,* more useful diagnostic and service information. In particular, certain embodiments employ multi-model switching machine learning techniques to enhance a user's communication with the provider (*e.g*., a troubleshooting request, etc.) and/or the provider's response. This can enable the provision of more relevant, actionable troubleshooting advice (or other communications), which can increase user satisfaction and enable the provider to use subscriber communication resources more efficiently, among other benefits.

For purposes of this disclosure, the term "user" means any entity that uses the solutions described herein, *e.g*., to submit a query to the system and/or receive a response back from the system. Users can include, but are not limited to, the actual customers (*e.g*., subscribers) of the provider; customers, associates, or guests of such customers; other users of the services provided (*e.g*., Internet service, television or content distribution service, telecommunication service, etc.), and or the like. For convenience, the terms "customer," "subscriber," and "user" are used synonymously herein unless the context clearly dictates otherwise.

In some embodiments, devices, systems, and/or methods can be implemented in a provider network, which can include edge networks such as cable networks, digital subscriber line (DSL) networks, metropolitan Ethernet networks, and/or passive optical networks (PON) networks, to name a few examples. In an aspect of some embodiments, machine learning (ML) and analytics capabilities (including without limitation a data client, ML agent, and/or ML proxy) can be distributed across various levels of the network hierarchy, covering devices and functional components, *e.g*., Internet of things (IoT) devices, user devices, customer premises equipment (CPE), signal amplifiers, edge node, other provider network components, and/or cloud resources. These capabilities, in some embodiments, can be dynamically configured, deployed, and/or utilized to achieve improved field diagnostics and services for the providers. In particular, these capabilities can include one or more general purpose conversational artificial intelligence engines (GPC AI) (also referred to herein as "chat engines") and/or other user interfaces (UI), *e.g.,* as described below, as well as a variety of adaptive and distributed ML models that enable chat (and/or other) prompt engineering and response augmentation.

The term "chat engine" (or GPC AI) is used herein to describe any machine learning engine and/or artificial intelligence that is configured to interact with other entities (*e.g*., with users); in some aspects, this interaction takes place in a conversational (*e.g*., prompt and response) manner and is designed to answer questions (*e.g*., queries) posed in a natural language format, and to provide those answers in a natural language format.. Examples of chat engines include, without limitation, ChatGPT from OpenAI, Bard from Google, LLaMA from Meta, any other publicly available and/or privately operated systems that perform similar functions, and/or the like. In an aspect, some embodiments can integrate a chat engine into the provider's analytic system to enhance the provider's field operations and services, generate natural and actionable chat insights, reports and surveys for the provider and/or the user, provide the user with self-help suggestions and/or promotion of operator services (*e.g*., via a chat interface), improve chat accuracy and relevancy for analytic applications. In other aspects, various embodiments can utilize diagnostics and/or operations information of device platforms and networks to improve chat accuracy and relevancy via chat prompt enrichment and chat response augmentation.

The term, "chat prompt," as used herein, means any text or data that can be provided, *e.g.,* to a chat engine to prompt a response, including without limitation a user query provided by a user. Å "response" is any response received from the target of a chat prompt (*e.g*., a chat engine) that is, or purports to be, responsive to the chat prompt. An "enhanced" chat prompt or response is a chat prompt or response, respectively, that has been enhanced by any of the techniques described herein, *e.g*., by adding information or context to a user query (or any other chat prompt) and/or response that increases the probability of a relevant and/or actionable response ultimately being returned to the user. As used herein, the term "operations information" can include any information about the network (or other) service being provided, including without limitation, information about network infrastructure (*e.g*., information about the architecture, topology, performance, outages or issues, etc. of the network or any of its various components), user environment information (*e.g*., user LAN information, user identification information, user sentiment information, subscriber account or profile information, information about the CPE and/or user devices involved with provision or consumption of the network service, etc.), provider policies, and/or any other available information that can be relevant to the user, the provider, the network service, and/or the provision of the network service.

Certain embodiments provide for more effective communication between the provider's analytic systems (and other resources) and users seeking help by refining user interface (UI) components and interactions. For example, some embodiments customize and/or fine-tune chat models for diagnostic tasks by using a chat engine's fine-tuning capabilities. Embodiments can also use leverage many different types of UI components and techniques for local user chat input/output, including without limitation, text chat interfaces (*e.g*., in a web browser and/or on a provider web page), voice interfaces (*e.g.*, interactive voice response (IVR)) and voice ML capabilities on the CPE device, landline phone interfaces (*e.g*., those available on Packet Cable VoIP systems and DSL/PON modems), far field voice (FFV) interfaces (*e.g*., those on set-top boxes (STB) and remotes), application and/or app interfaces on PCs, mobile phones, tablets, smart TV and other smart devices, and/or the like, electronic program guide (EPG) interfaces provided on televisions by STB, etc.. Some embodiments can also implement various ML capabilities in these UI, including without limitation keyword spotting (KWS), speaker identification, natural language processing (NLP), text-to-speech (TTS) and speech-to-text (STT), etc. Embodiments are not limited to any particular UI components or techniques, however; any of the many existing UI technologies can be implemented in accordance with various embodiments.

More generally, as used herein, the term "user interface" means any communication interface (and/or device used to provide such an interface) that allows a customer (or other user) to consumer products (including services) provided by a provider and/or interact with the provider. Such interaction can include, for example, providing a user query to the provider network and/or receiving a response to that query. The term "user query" is used broadly herein to describe any communication from a user to the provider (and/or to a chat engine providing responses therefor), using whatever mode of communication is available and/or appropriate given the particular user interface(s) employed. In some respects, the query might comprise a question and/or request about an issue or problem using the provider's services or network and/or the user's CPE, including without limitation service requests (*e.g*., requests for the provider to repair or make a change to correct a real or perceived issue with the customer's consumption of a service and/or the network). In some cases, the interface used by the customer to provide the query and the interface used to provide the response might be the same. For example, a user might place a phone call on a landline phone asking a question to an IVR (or a human operator), and the response to that query might be provided (again by an IVR or human operator) through the same phone, *i.e.,* in the form of a telephone call. Similarly, a customer might send a query via a chat interface on a provider's website and receive a response through the same chat interface. In other cases, however, the interfaces used by the provider's system to receive the query and provide the response can differ. For instance, the provider's system might receive a query through a chat interface and provide the response through a telephone interface (*e.g*., via callback). Except where explicitly stated otherwise, neither the nature of the CPE nor the nature of the UI limits any embodiment, and the examples above are provided for illustrative purposes only.

Various embodiments therefore can enable user-initiated local diagnostics and self-help, diagnose and/or repair Internet access issues (*e.g*. related to data speed, latency, etc.), perform and/or teach users to perform LAN and/or WiFi configurations (*e.g*. changing channels/bands, adding extenders, adjusting transmitter power, etc.), address STB video issues (*e.g*. macroblock issues, black screen, stuttering, etc.), and the like. In other aspects, the UI can, if appropriate, promote or hint new features and services to the user (perhaps with summary, pricing, and contact instructions). Such services might include Internet tier upgrades, video package upgrades, newly available WiFi service, new devices and/or device features, etc.

As used herein, unless the context dictates otherwise, the term "local" is used from the perspective of the user and/or the CPE, meaning a the term "local device" refers to the CPE, and the term "local," when describing components refers components that are part of and/or local (*e*.*g*., on the same premises and/or owned, used, etc. by the user of the CPE (even of not on the premises, as may be the case with mobile devices, etc.). Conversely, the term "remote device," as used herein, can include any device that is not the CPE. For example, as discussed below, remote devices can include, without limitation, one or more edge devices, core devices, and/or cloud servers. References to components as "remote" indicate that such components are part of a remote device.

In another aspect, some embodiments can enhance accuracy and/or relevance of analytic insights for the provider. This can include providing more detailed analysis (*e.g*., based on collection, aggregation, and/or correlation of various user, device, network, application-specific, and general data) using various ML models. This can also provide more actionable and/or specific recommendations that consider many more factors than previously possible, again through the use of ML models.

One set of embodiments provides devices; such devices can include, without limitation, CPE, such as cable, DSL and/or PON modems, optical network interfaces (ONU) routers, access points, fiber interfaces, ethernet interfaces, cable and/or satellite set top boxes (STB) (and/or satellite receivers) and the like. Such devices can also include edge devices, such as cable head-ends, DSL access multiplexors (DSLAM), optical line terminals (OLT), signal amplifiers, and other provider equipment, such as core devices, computer systems (*e.g*., personal computers, servers, etc.) and/or the like. Some embodiments provide devices that can serve as components of larger devices (such as those described above); examples of such components can include semiconductor components that can range from single circuits to complex systems on a chip (SoC).

Among other hardware and/software components, such devices can include logic. As described in further detail below, the logic, in some cases, can be hardware circuitry. In other cases, some or all of the logic might comprise instructions that are executable by one or more processors. Thus, such devices can include one or more processors as well (examples of which are described in further detail below. In some cases, the instructions might be encoded on a non-transitory storage medium, which might include firmware and/or, *e.g*., if some or all of the instructions are implemented as software, a persistent or volatile storage device, many of which are described in detail below. In a set of embodiments, the logic can configure or program the device to perform operations and/or methods described herein.

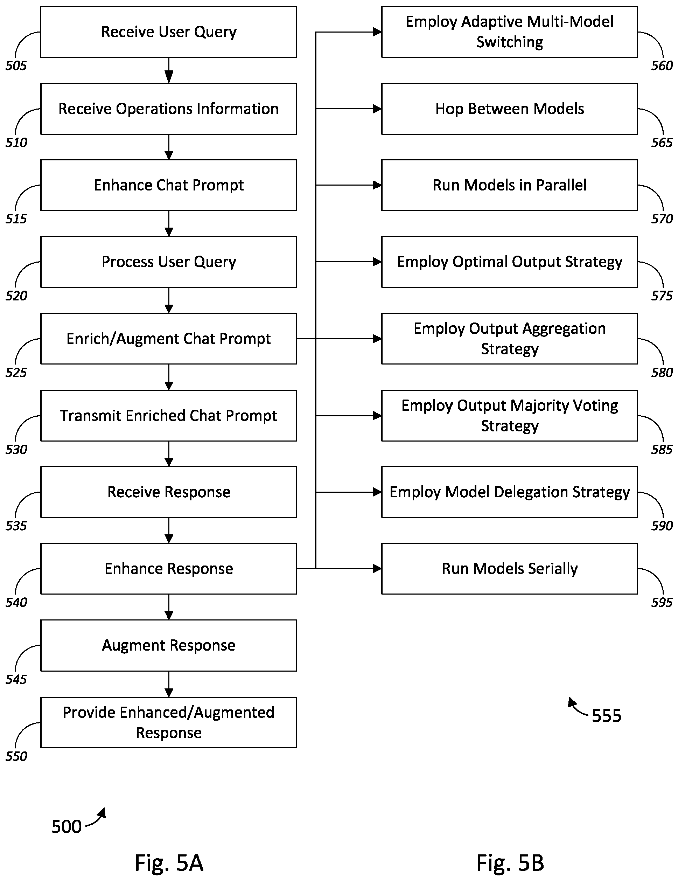

For example, a device in accordance with some embodiments might comprise logic to receive a user query in relation to a network service and/or logic to receive operations information about the network service. In some cases, the device can include logic to enhance a chat prompt, *e.g.,* using a first machine learning engine, based at least in part on the operations information. A "machine learning engine" means software that executes one or more machine learning jobs or tasks using one or more machine learning models. In an aspect, a machine learning engine can be considered to "comprise" such models even if the models are technically separate from the engine itself. The discussion below describes various techniques that can be performed by a machine learning engine to select models, organize the operation of the selected models, execute tasks and jobs using such models, and/or the like. In an aspect, a machine learning engine can be any combination of hardware and/or software that can perform these techniques. In some cases, enhancing a prompt can comprise enriching the prompt and/or generating a supplementary prompt. Both of these operations are described in further detail below. In some cases, the device can include logic to split the user query to "local" (to that device) and "remote" (from that device) answerable queries. The machine learning engine in the device (*e.g*., CPE, a first edge device, etc.) could provide a first answer to the received query as a part of new prompt, which it could then transmit with a simplified query to a second machine learning engine at a second device (*e.g*., another edge device, a core device, etc.). The device might also comprise logic to transmit the enhanced chat prompt for processing by a GPC Al. In particular embodiments, the device might include logic to receive a response generated by the GPCAI, logic to enhance the response using a second machine learning engine, and/or logic to provide the enhanced response for presentation to the user. Such devices might include other logic, for example logic to perform actions described in more detail in connection with the figures, including without limitation Figs 5A and 5B.

Another set of embodiments provides systems that can comprise multiple devices. Some or all of such devices might include similar functionality (and/or different or additional functionality) as described above and elsewhere herein. Merely by way of example, a system might comprise a first device. In some cases, the first device can be CPE or the like. The first device might comprise logic to receive a user query in relation to a network service, and/or logic to receive first operations information about the network service (*e.g*., operations information about a local network, the device itself, etc.). The first device might further comprise logic to enhance a chat prompt, *e.g*., using at least a first machine learning engine, based at least in part on the operations information. The first device might also include logic to transmit the enhanced chat prompt for processing by a chat engine. This transmission does not necessarily have to be directed to the chat engine, however. For example, in some embodiments, the first device might direct the transmission of the enriched chat prompt to be received by the second device.

In some cases, the second device might be, *e.g.,* an edge device in a broadband provider's edge network or another device remote from the CPE, *e.g*., a remote device, as described in further detail below. The second device might comprise logic to receive the enhanced chat prompt from the first device and/or logic to receive second operations information (*e.g*., about the edge network, provider policies, etc.). The second device, then, might include logic to further enhance the chat prompt, *e.g.*, using at least a second machine learning engine, based at least in part on the second operations information. The second device could also include logic to transmit the further enriched chat prompt for processing by the chat engine.

In some embodiments, the second device can include logic to facilitate the return of information to the user. Merely by way of example, the second device could include logic to receive a response generated by the chat engine; logic to enhance the response, *e.g*., using at least a third machine learning engine, and/or logic to provide the enhanced response to the first device. The first device might further comprise logic to receive an enhanced response from the second device, logic to further enhance the response, *e.g*., using at least a fourth machine learning engine, and/or logic to provide the further enhanced response for presentation to the user.

Various embodiments can provide substantial improvements to current systems and processes. (It should be noted, of course, that embodiments are not limited to those that provide all (or any) of such improvements.) Merely by way of example, some embodiments allow the seamless integration of a chat engine (or chat bot) into the analytic system to generate comprehensive and insightful information for the operator and the user, with chat prompts and responses being engineered (*e.g*., enhanced, augmented, etc. based on the techniques described below) to adapt to the dynamic conditions of the user input, device and network status, user/operator preferences, and the like.

In an aspect, some embodiments employ distributed multi-stage processing, which includes ML models that are can be executed cooperatively on CPE, provider devices (*e.g*., edge devices, core devices, etc.) and/or the cloud (*e.g.,* cloud-based chat engines). In another aspect, the ML models (including without limitation those described below) executing on CPE and/or provider devices can provide pre-processing, post-processing, and/or direct assist for the chat engine. Such ML models can be adaptively configured and/or selected/determined via multi-model switching schemes, which include, without limitation, model hopping modes, parallel model modes, and serial model modes, *e.g*., as described in further detail below.

The multiple models employed by various embodiments can include, without limitation, pre-trained fixed models and/or auxiliary models that are derived and dynamically determined using some common backbone network architectures. The generation of auxiliary models from common backbone network architectures can consider factors such as model complexity, model performance, ML engine processing capabilities, device and network status, user and operator preferences, etc. In an aspect, the generation of auxiliary models can be represented by application-specific multi-heads of a common backbone architecture. In some embodiments, the multi-heads can be trained with application-specific and/or dynamic chat prompts and datasets, while the backbone architecture might be trained with common and static chat prompts and datasets. As used herein, the term "application," except when used in conjunction with mobile phones or computers (in which case "application" or "app" means a software application stored or running on such devices) is used broadly to mean the application, purpose, goal, etc. for which the techniques described herein are being employed, according to the embodiment, implementation, or specific conditions. Thus, an application might be diagnosing and/or repairing a network outage or other condition reported by a user or another device, developing a response to a particular query from a user, etc. As disclosed herein, in many cases, the selection of ML models to be used, or decisions to switch between models, can be based (at least in part) on the application, because different models might be relatively more or less appropriate (for a variety of reasons) in the context of a given application. Thus, "application-specific" information, as used herein, means any information that is specific to that particular application, including without limitation operations information (*e.g*., as described above) as well as any other information that pertains to the specific circumstances (as opposed to general information, such as generalized network information, troubleshooting information, etc. that is not specific to the particular circumstances surrounding the user's query).

Some embodiments include capabilities to retrain various ML models. For example, the ML models and/or chat engine can be retrained (either offline or during operation) to adapt to field conditions of the provider's equipment, the CPE and user equipment, diagnostic and service requirements, etc. In some embodiments, the ML models executed at various locations (*e.g*., CPE, edge devices and other provider devices, on the cloud, etc.) can cooperate with each other improve training effectiveness and end-to-end hybrid system functionality.

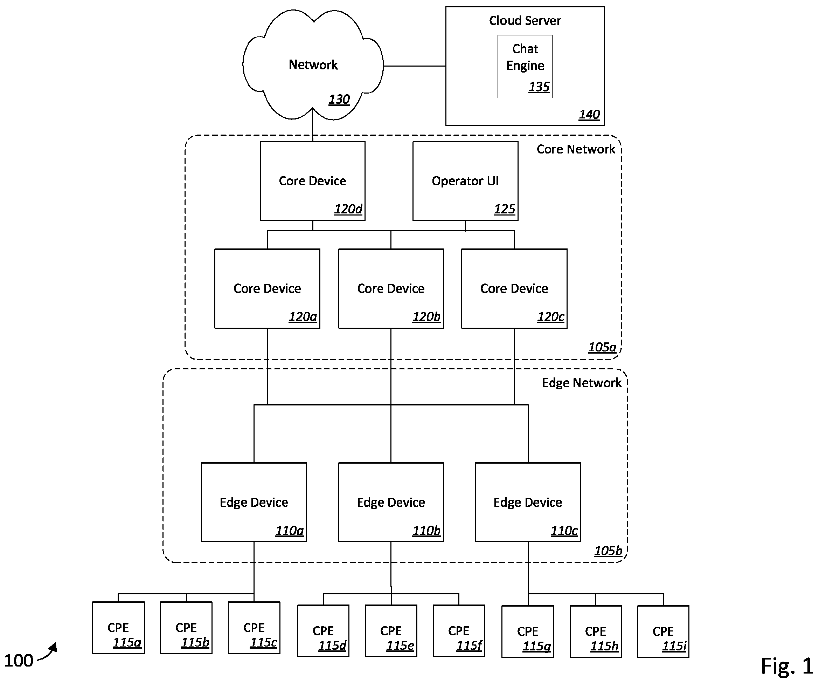

Figs. 1-4 some examples of such devices and systems. Fig. 1 is a block diagram illustrating an exemplary broadband provider's network 100 that can include components of a system that can provide, *inter alia,* field diagnostics and services, in accordance with some embodiments. The network 100 includers a core network 105a and an edge network 105b. In an aspect, the core network 105 might be an internal network of the broadband provider, including a plurality of edge devices 110, some of which (*e.g*., edge devices 110a-c) provide connectivity between devices in the core network 105a and CPE 115. CPE 115 can include any device that serves as an interface between the edge network 105b and user devices (not shown) at a consumer's premises.

Such CPE can include, without limitation, the CPE described above, and CPE generally can be considered equipment on the subscriber's premises that provides an interface with a provider's network. In many cases, CPE is given, loaned, leased, /and/or sold to the subscriber; in other cases, CPE might be purchased by the subscriber from a third party or otherwise provided by the subscriber.. Moreover, in some embodiments, CPE can also include user devices, even though some conventional uses of the term "CPE" might exclude such user devices. The term "user device" is used broadly herein to include any device that can (but does not necessarily always) provide connectivity between the customer (or any other user) and the edge network 105b. User devices thus can include, without limitation, mobile phones, voice over IP (VoIP) devices, landline {*e.g.*, plain old telephone system or POTS) telephones, computers (including without limitation laptop computers, desktop computers, workstations, servers, tablet computers, etc.), television and television remotes, display devices, game consoles, smart home appliances, local area network (LAN) hardware, and/or the like. In an aspect, CPE 115 and/or user devices can provide, *inter alia,* one or more UI to allow a user to interact with the provider's network 100, including without limitation those described above.

Each of the edge devices 110 can be any device that provides an interface between the core network 105a and a device outside the core network 105a. In the edge network 105b, for example, the edge device 110a-c might be cable head-ends, DSL access multipliers (DSLAM), passive optical network (PON) transceivers, optical line terminals (OLT), and/or the like. More generally, an edge device 110 might comprise any device that provides connectivity between the core network 105a (and/or devices therein, such as core devices 120 and/or operator user interfaces 125) and resources outside the core network 105a, especially the CPE 115. The core network 105 might also include a border device, such as core device 120d with a WAN connection an external network 130, *e.g*., through a to a point of presence (POP) and/or peering connection. In some embodiments, the external network 130 might be the Internet.

The edge devices 110 and core devices 120 (collectively, "provider devices") can be any servers, networking devices (*e.g*., switches, routers, etc.) or other devices that are involved in the provision of broadband services to customers, especially those within the core network 105a and/or edge network 105b, but more generally anywhere in the provider network 105. They can include content distribution networks (CDN), diagnostic and/or repair facilities, and/or the like. In some cases, one or more core devices 120 might be part of the communication path providing content or services (*e.g*., broadband service) to a consumer. As such, one or more core devices 120 might participate in the chat and prompt enrichment process performed by various embodiments.

In some embodiments, the provider network 100 includes (or, as in the illustrated embodiment, is in communication with) a chat engine 135. In an aspect, the chat engine 135 might reside on a cloud server 140 (which can comprise any number of physical or virtual machines, etc.), which might have other logical components described elsewhere herein. Thus, while Fig. 1 illustrates the external network 130 providing communication between the core network 105a and the chat engine 135, other embodiments might include the chat engine 135 and/or the cloud server 140 within the core network 105a and/or another network operated by the broadband provider. In certain embodiments, the provider operates the cloud server 140 and/or chat engine 135. In other embodiments, the cloud server 140 and/or chat engine 135 might be operated by a third party, with whom the provider might or might not have a contractual arrangement for use of the services of the cloud server 140 and/or chat engine 135.

In an aspect, the chat engine 135 can receive a prompt (*e.g.*, a prompt formed from a user query, as described herein) and provide a response. As described herein, various embodiments can enhance the prompt and/or the response to increase the likelihood that the response will include actionable, understandable information that properly addresses the (real or perceived) condition that provoked the user query.

In particular embodiments, the provision of responses to user queries can involve human personnel (such as support engineers, help desk attendants, etc.). Accordingly, the provider network 110 (and/or the core network 105a) might include, as illustrated, and/or be in communication, with an operator UI 125. The operator UI 125 might comprise one or more devices that can provide a UI for such personnel that work for or on behalf of the provider. In some embodiments, the support personnel might (directly and/or indirectly) receive the user query (or a prompt generated therefrom) from the user, communicate that information to the chat engine 135 (directly or through other devices, such as edge devices 120), receive a response from the chat engine 135, enhance that response, and/or communicate that response to the customer, either directly, *e.g.*, via a voice or chat interface, or indirectly, *e.g*., by providing a response to another device, such as an edge device, that might or might not (further) enhance or augment the response before transmitting the message further toward the customer (and/or directly to the customer, *e.g*., through the UI in the CPE 115). As described in further detail below, some embodiments can be implemented in network, devices, and systems such as those illustrated by Fig. 1.

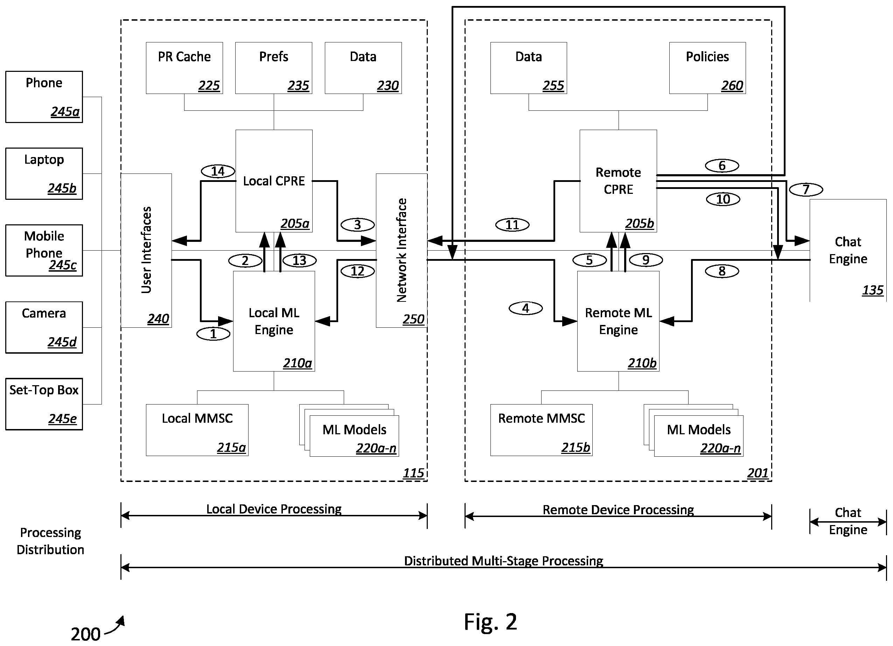

Fig. 2 is a logical block diagram that illustrates an information flow between various components of an exemplary system 200 for providing field diagnostics and services, in accordance with some embodiments. The exemplary components include CPE 115, in direct or indirect communication with one or more remote devices 201, one of which (*e.g*., a cloud server 140) ultimately is in communication with a chat engine 135. As noted above, the term "remote device" is used broadly herein and can refer to any device that is not the CPE. Merely by remote devices can include, without limitation, one or more edge devices 110, core devices 120, chat engines 135, cloud servers 140, and/or the like. References to components as "remote" indicate that such components are part of a remote device and/or are situated remote from the CPE 115.

The connection between the CPE 115 and a particular remote device 201 might be relatively direct (*e.g*., if the remote device 201 is an edge device 110) or relatively indirect (*e.g*., if the remote device 201 is a cloud server 140, in which can the communication between the CPE 115 and the remote device 201 might be routed through one or more edge devices 110, core devices 120, a network such as the provider network 105 and/or an external network 130, etc.)-In some cases, there might be a plurality of remote devices 201 between the CPE 115 and the chat engine 135 (including, in some embodiments, a cloud server 140 on which the chat engine 135 resides) Thus, the components of Fig. 2 are provided for exemplary purposes only, and the in other embodiments, the information flow might include additional and/or different component, such as additional edge devices 115, core devices 120, and/or the like in any communication path configuration, *e.g*., serial, parallel, etc.

The CPE 115 includes a local chat prompt and response engineering (CPRE) component 205a, which can comprise, *e.g.*, software running on a processor of the CPE 115, as well as a local adaptive multi-modal ML engine (ML Engine 210a), which can also comprise, *e.g.,* firmware or software running on a processor of the CPE 115. These logical components, while illustrated separately, can also be combined, such that the CPRE 205a is implemented as part of one or more ML models operated by the ML Engine 210a; similarly each component can run on the same or different processor(s), which can include, without limitation, a central processing unit (CPU), a graphics processing unit (GPU), a neural processor (NPU), a digital signal processor (DSP), or any other general-purpose or specialized processor. The local ML Engine 210a can employ multiple ML models 220a-n controlled by a multi-model switch controller (MMSC) 215a. As described in further detail below, the MMSC 215a can be hardware, firmware, and/or software that includes logic to control the use of and/or switching between different models in an adaptive multi-model switching scheme. The local CPRE 205a can include a prompt and response cache 225. The CPRE 205a also has access to (and/or can collect, receive and/or store) input data 230, which can include without limitation, platform profile and status information 230 of the CPE 115 and/or other local conditions (*e.g*., local network statistics and information, weather data, etc.), as well as user and/or operator preferences 235.

The CPE 115 can also include one or more UI 240, such as those described above, some or all of which might be provided through various user devices 245, which can include without limitation, a landline phone 245a, laptop or other computer 245b, mobile phone 245c, camera 245d, STB 245e, etc. The CPE 115 also comprises a network interface 250, the nature of which will depend on the nature of which will depend on the type of edge network 105b employed. The network interface can provide communication between the CPE 115 and the remote device 201 using typical facilities for such edge networks.

The remote device 201 might also include a CPRE 205b and/or a ML engine 210b. The remote device, in some embodiments, also has access to (and/or can receive, collect, and/or store) input data 255 and/or policy information 260. Depending on the nature of the remote device, the data 255 and policy information can vary. For example, if the remote device 201 is an edge device 110 and/or a core device 120, the data 255, which can include without limitation network profile and status information about the provider network 105 (and/or parts thereof, such as the edge network 105b), and relevant operational policies of the provider 255. If the remote device is another device (*e.g*., a cloud server 140), the data and/or policy information available to the ML Engine 210b and/or CPRE 205b can differ, and might include, for example, more generalized data including, *e.g*., specifications and information about the model of CPE 115 and/or other remote devices 201, generalized information about network (*e.g*. Internet) issues, etc. Each remote device 201 also provides for communication (via any appropriate communication path and/or through any appropriate additional remote devices 201) with a cloud server 140 (which, in this context, can be considered another remote device 201, except that the cloud server might also host the chat engine 135). As noted above, the cloud server 140 might be located within the provider network 105 and/or might be accessed over an external network 130 (*e.g.,* the Internet).

In an aspect, the local ML Engine 210a can perform local ML processing o the user input, such as KWS, speaker ID, NLP, TTS/STT, sentiment detection, gesture detection, movement detection, etc., using local ML models 220a-n. The local ML Engine, in another aspect, can perform any necessary pre-processing for the local CPRE function 205a. Similarly, the ML Engine 210b (if any) in the edge device can perform any necessary pre-processing for enrichment of the chat prompt by the corresponding CPRE function 205(b) (if any). In some embodiments, the ML Engines 210 can support model fine-tuning and dynamic multi-model switching and re-configuration (*e.g*., as described in further detail below), adapting to the user input, as well any other relevant information or conditions, *e.g*., the status of the device and network 239, 255, user and operator preferences 235, and/or operator policies 260. The dynamic ML model switching is coordinated by the corresponding MMSC 215a, 215b as appropriate. While various embodiments can employ many different ML models 220 in different types of arrangement, typical ML models 220 for the ML Engines 210 might include convolutional neural network (CNN) models, transformer models, and/or recurrent neural network (RNN) models. The selection of these models 220 may be based on their performance and cost optimizations to support the local applications and/or determined with respect to the corresponding ML models in core devices 120 and/or in a cloud server 140 in order to increase training effectiveness and enhance the end-to-end hybrid framework for applications. In some cases, these models can be independent and/or these models can also be created as application-specific multi-heads of a common backbone network architecture, for example as described below. The multi-heads can be trained with application-specific and dynamic chat prompts and datasets, while the backbone architecture might be trained with common and static chat prompts and datasets.

More specifically, in some embodiments, the local CPRE function 205a can perform local prompt composition and enrichment using the ML-processed user prompt, based, in some cases, on the data 230 and/or the user and operator preferences 235. · The local CPRE function 205a can also perform local response augmentation using the response received one or more of the remote devices 201, in some cases by augmenting the response based on the data 230 and/or the user and operator preferences 235. Likewise, the CPRE function 205b (if any) of each remote device 201 can further enrich the prompt after processing by the corresponding ML engine 210b (if any) and/or augment the response, perhaps in conjunction with data 255 and/or policies 260. In many ways, the ML Engine 210b and/or MMSC 205b of a remote device 201 can function much like those of the local device 115. In some cases, of course, the remote device 201 need not perform the initial prompt generation from the user query, because that often can be taken care of at the CPE 115. But with regard to prompt and response enhancement (*e.g*., enrichment and/or augmentation), the CPE 115 and remote device 201 can function similarly (albeit with perhaps access to different data, different computing resources, etc.). More specifically, both the CPE 115 and the remote device 201 can operate in accordance with the procedures and techniques discussed herein. Moreover, as discussed further below, there may be multiple remote devices 201 in the arrangement of Fig. 2, and each of those devices can perform (but need not perform in every case) similar prompt and response enhancement procedures.

In some cases, *e.g*., when the remote device 201 is the cloud server 140, the CPRE 205b can perform cloud prompt composition and enrichment, *e.g*., with data 255 and/or policy information 260. · It can also perform cloud response augmentation using the response received from the chat engine 135, in conjunction with the same type of data. In some cases, CPRE 205b of the cloud server 140 might be assisted by appropriate ML models 210b. The chat engine 135 can perform cloud ML processing related to chats. In some cases, the chat ML models can be retrained and fine-tuned with domain-specific datasets.

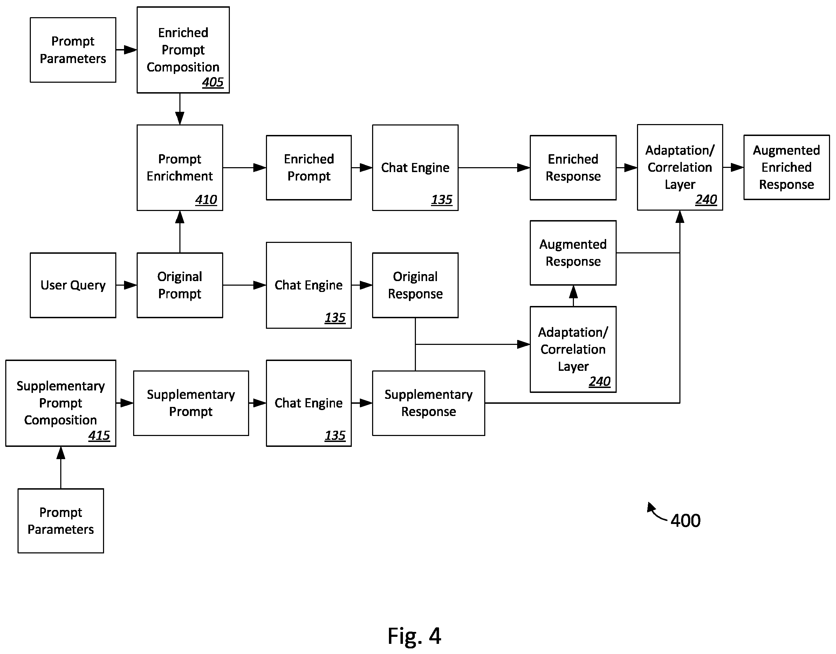

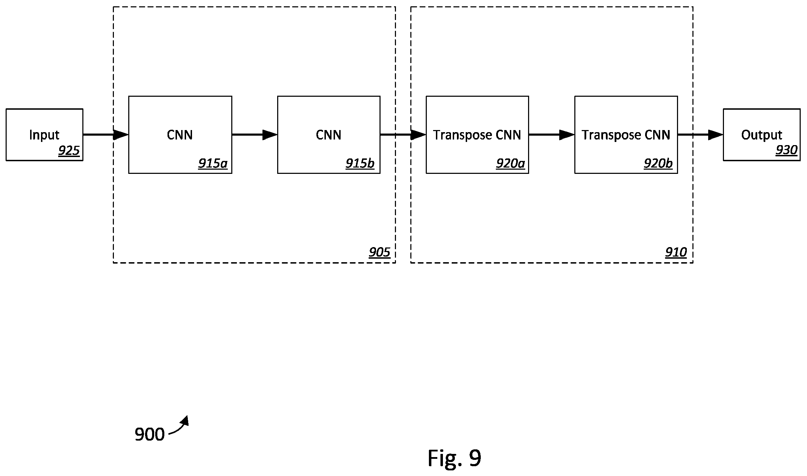

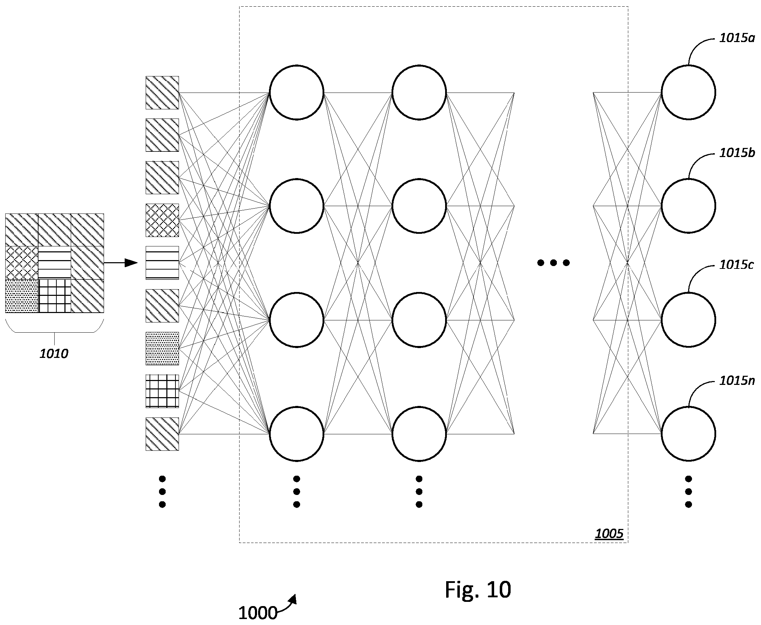

The operation and information flow of the system 200 is illustrated by arrows on Fig. 2 labeled with the numerals 1-15. In an exemplary embodiment, the operation can proceed according to a flow such as the following:
1. User input is captured by the UI (*e.g*., through a user device 245) as the input for the local ML Engine 210a. The input can be in the form of text, voice, image, and/or video, etc.
2. By using appropriate ML models 220a-n available locally, the local ML Engine 210a at the CPE 115 produces the input for the local CPRE function 205a. For example, the input might take the form of text, which describes the user prompt and other user attributes such as sentiment, gesture, and movement, etc. In other cases, the input might be text converted from speech, text typed by a user, etc. The ML engine might analyze other information, including without limitation prompt parameters (described below) and/or diagnostic to generate additional input. For instance, Figs. 9 and 10, discussed below, illustrate how an adaptive multi-model switching technique can generate diagnostic data for a Data Over Cable Service Interface Specification (DOCSIS) network. This input is transmitted to the local CPRE function 205a.
3. The local CPRE function 205a generates an enhanced prompt, *e.g*., by forming an original prompt from the raw user query and/or the input from the ML Engine 210a and/or enriches the prompt to provide an enriched prompt, *e.g*., by incorporating prompt parameters (which can include, without limitation, the user and operator preferences 235 and the device platform profile and status 230) with the user query/original prompt. Fig. 4, discussed below, illustrates a technique for producing an enriched prompt, for example. Fig. 4 also illustrates a technique for generating one or more supplementary prompts, which can be used as described below to trigger one or more supplementary responses. The enhanced prompt can be stored in the local prompt and response cache 225, in order to create a look-up entry when the corresponding response is generated. If a corresponding response is already available in the local prompt and response cache 225 for the user prompt, the cached response can be used directly. Otherwise, the enhanced prompt is sent to the local network interface 250 for transmission to a remote device 201. In some cases, the enhanced prompt might include any supplementary prompts generated by the local CPRE 205a, in which the transmission of the enhanced prompt could include the supplementary prompts. In other cases, the supplementary prompts (if any) might be transmitted separately. This transmission can take place though the edge device 110, which is one type of remote device 201 and which provides communication between the CPE 215 and other remote devices 201, *e.g*., through the provider network and/or external network 130, as described above.
4. The enhanced prompt is sent by the network interface 250 to the remote device 201, which, in some cases, might route the prompt to an additional ML Engine 210b for further processing. (In other cases, the remote device 201 might simply forward the prompt to another device (*e.g*., another remote device) without any further processing of the prompt.
5. In some cases, the remote device 201, which, as noted, can also include a CPRE 205b and/or ML Engine 210b, might further generate additional input with the ML Engine 210b and provide the input to the CPRE 205b. The CPRE 205b thus might enhance the (perhaps already enhanced) chat prompt (*e.g*., enrich the chat prompt with additional data, which can include network status and profile information 255 and or operator policies 260), and/or generate one or more (additional) supplementary prompts. In other cases, a particular remote device 201 might not include these components, and/or they might not act to enhance a chat prompt in a particular case.
6. The prompt (whether or not further enhanced by the remote device 201) is transmitted from the remote device 201 to another remote device 201. Process 5, above, can be repeated for each additional remote device 201. After some number of iterations, as the prompt passes through the network(s) (*e.g*., 105b, 105a, 130, etc.), toward the chat engine 135, the remote device 201 will be a cloud server 140.
7. In some cases, the cloud server 140, being a remote device, might include an ML engine 210b and/or a CPRE function 205b, which can further enhance the chat prompt (process 5, above). This enhanced prompt (which has, at this point, been enhanced at the CPE 215 and possibly one or more remote devices 201, including without limitation the cloud server 140, is provided as the input prompt to the chat engine 135.
8. The chat engine 135 generates the response to the input prompt by running appropriate cloud ML models (*e.g*., chat models) on the enhanced prompt. Some of these models can be retrained and fine-tuned using application domain-specific datasets. In the same way, the chat engine can generate supplementary responses to any supplementary prompts included in (or submitted separately from) the enhanced prompt. The chat engine 135 response(s) is/are transmitted to the remote device 201.
9. The response from the chat engine 135 can be augmented by the CPRE function 205b in each remote device 201, *e.g.,* by incorporating additional information, which can include, without limitation the data 255 and/or operational policies 260. Fig. 4 illustrates an example of generating a supplementary prompt to trigger a supplementary response, which can be used to augment a response. Other embodiments can use other techniques to augment a response, including without limitation by adding application-specific and/or provider-specific information, analytic and/or diagnostic information from a provider's analytic system, etc. to the response from the chat engine.
10. The (perhaps enhanced and/or augmented) response can be transmitted to each respective remote device 201 in turn. In some cases, the response follows the same (although reversed) path through remote devices 201 that the prompt followed to reach the chat engine 135. In other cases, the return path might be different and/or might include more, fewer and/or different remote devices than the original path.
11. After passing through and/or being further enhanced/augmented by the applicable remote devices 201, the response is transmitted to the CPE 115.
12. The augmented response received by the CPE network interface 250 is processed by the local ML Engine 210a and applied as input to the local CPRE function 205a.
13. The local CPRE function 205a generates the final response by incorporating appropriate locally available information for the application, the device, the user, and/or the operator (*e.g*., data 230 and/or user and operator preferences 235).
14. The augmented response is provided to the UI 240, which provides the response to the user in an appropriate format (which might employ the same user device (*e.g*., 245a) that originally transmitted the query and/or a different user device (*e.g*., 245b-e).

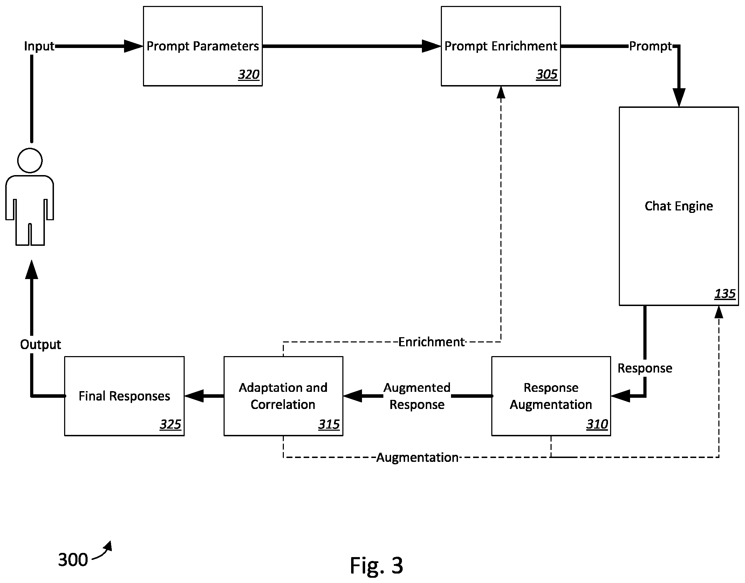

Fig. 3 is a block diagram illustrating a chat prompt and response engineering model 300, in accordance with some embodiments. In some embodiments, this model 300 can be generally applied to many different physical or logical configurations, including without limitation configurations similar to those illustrated in Figs. 1 and 2. In an aspect, chat prompt and response engineering model can involve some or all of the following functions, which can be implemented both locally on-device (*e.g.*, CPE 115, edge device 110, etc.) and/or in the cloud: a prompt enrichment function 305, a response augmentation function 310, and/or an adaption and correlation layer 315.

The prompt enrichment function 305, in a general aspect, can enrich the original user prompt. In some cases, the enriched prompt can trigger more relevant and useful chat responses form the chat engine 135. The response augmentation function 310 can involve augmenting the original chat response form the chat engine 135 with supplementary content that is triggered by a supplementary prompt composed from supporting parameters. The adaptation and correlation layer 315 can adapt the final response by correlating the chat history. It can also perform further prompt enrichment and response augmentation if necessary. One feature of many embodiments is that each of these functions can be partially or wholly performed at various stages of an information flow (*e.g*., the information flow described above with respect to Fig. 2), depending on system confirmation, resource availability, the nature of the specific prompt and/or response, etc.

All three functions 305-315 can also incorporate supplementary information (*e.g*., prompt parameters 320). Exemplary prompt parameters 320 can include, without limitation, some or all of the following: the user prompt itself; analytic insights provided, *e.g*., by the provider's analytic system and/or an ML model backbone; device platform attributes (which can include, without limitation, information about the device platform configuration profile and dynamic status of the CPE device 115 and/or local network, user devices, etc.); network attributes (which can include, without limitation, information about the provider's network configuration profile and dynamic status, other information about general outages or issues on the Internet, etc.); service attributes, which can include, without limitation, operator preferences and polices (*e.g*., QoS or traffic management policies that might affect perceived network performance at the CPE 115); and/or user attributes, which can include, without limitation, user preferences, dynamic sentiment, gesture, and movement, etc.

The model 300, in an aspect, can generate one or more final responses 325 that can be provided to the user via an appropriate UI 240. A final response 325 can include static information and/or information generated dynamically by the chat engine 135, the response augmentation function 310 and/or the adaption and correlation layer 315. Merely by way of example, a final response 325 could include diagnostic highlights related to the original user query, operator reports and/or surveys, self-help guides, promotional materials, and/or the like.

Fig. 4 illustrates a process 400 for enriching and/or augmenting prompts and/or responses. As noted above, enhancing a prompt or a response can include any improvement or modification of a prompt or response, especially (but not limited to) such improvement or modification with the purpose of ultimately returning more useful, relevant, actionable, and/or understandable information to the user in response to the user's query. Enhancing a prompt thus can include (without limitation) enriching a prompt, generating one or more supplementary prompts, enriching and/or augmenting a response, etc. In some embodiments, this process (and/or operations thereof) can be used in systems and/or methods disclosed herein and/or to implement the model 300 of Fig. 3. This process 400 can be performed at any level of the hierarchy (*e.g*., CPE 115, edge device 110, core device 120, cloud server 140, etc.) and/or any combination of those, and the process 400 provides one technique to enrich a prompt, which can be used produce an enriched response from a chat engine 135. The process 400 also provides one example of a way to produce an augmented response. It should be noted, however, that embodiments are not limited to either of these techniques.

To produce an enriched response, an enriched prompt composition function 405 (which might be a CPRE like those described above) supplies data from one or more prompt parameters (such as those described above, to name a few examples), to a prompt enrichment function 410, which also receives the original prompt (which, as discussed above, might comprise the user query after processing by one or more ML engines). In some embodiments, the composition function 405 and the enrichment function 410 might be combined within a single functional component, such as a PRCE 305. The enriched prompt is fed to the chat engine 135 to trigger the enriched response.

To trigger an augmented response, the original prompt can be fed into the chat engine 135 to produce an original response. The process 400, however, can also produce a supplementary prompt using a supplementary prompt composition function 415, which might be implemented in a CPRE in some cases and/or might employ data from one or more prompt parameters. The supplementary prompt can be, but need not necessarily be, generated based on the original response to the original prompt (*e.g*., as a follow up "question" to the original prompt). The supplementary prompt can be fed to the chat engine 135, which then produces a supplementary response. The supplemental response and the original response can be integrated (*e.g*., in an adaptation/correlation layer 240) to produce an augmented response.

In some cases, these two aspects of the process can be combined in different ways. For example, the original prompt might be used to generate an enriched prompt and a supplementary prompt, as described above. The resulting enriched response and supplementary response can be integrated (*e.g*., in the adaptation/correlation layer 240) to produce an augmented, enriched response. In some cases, the original prompt might also be provided to the chat engine 135, and the original response and supplementary response (perhaps, although not necessarily, integrated first to produce an augmented response, as shown in Fig. 4) can be integrated with the enriched response to produce an enriched, augmented response.

This process can be understood further by reference to an example of a user of a STB who has a problem with the attached television. In this example, the user can provide a simple query, which is used to generate an original prompt. For instance, the user might provide a simple query, such as "Why doesn't my TV work?" On its own, this query likely trigger a generic original response, such as, "Without more information, it is impossible to answer this question. There could be a variety of reasons why your TV is not working, such as a power issue, a faulty connection, or a problem with the internal components. It is best to consult a professional technician to diagnose and repair the issue." This is not terribly helpful.

One the other hand, if the STB adds enriches the original prompt with some prompt parameters, such as the name of the provider and/or a local environment condition, the enriched prompt it generally will trigger a more relevant and useful augmented response from a chat engine. For example, if "I have a Comcast set-top box with an HDMI connection to my TV" is added by the STB to enrich the original prompt, the enriched prompt becomes: "I have a Comcast set-top box with an HDMI connection to my TV. Why doesn't my set top box work?" This will generate a better response, such as the following: "If your TV is not working with the Comcast set-top box, it could be due to a number of different issues. First, make sure that the HDMI cable is securely connected to both the set-top box and the TV. If the connection is secure, then you should check that the set-top box is powered on and that the TV input is set to the correct HDMI source. If the problem persists, then you may need to contact Comcast for further assistance." This response is far more helpful.

In some embodiments, chat response augmentation can add a context-sensitive supplementary response to the original chat response to produce an augmented response that is more specific and relevant to the user's situation. In some cases, a supplementary prompt from the CPE or a core device can be used to trigger a supplementary response from the chat engine. In an aspect, a supplementary prompt might be dynamically generated according to operating conditions or statically provisioned. In another aspect, the supplementary prompt can be composed from context information from sources such as the device platform, network, system configuration, and/or service profile. The composition can follow a pre-defined or dynamic syntax.

A simple example might be providing a supplementary prompt of "If this doesn't work, how can I contact my provider?" This supplementary prompt might trigger a response of something "If you are unable to resolve the problem yourself, you can contact Comcast Xfinity customer service by calling 1-800-Xfinity (1-800-934-6489) or by visiting their website at www.xfinity.com/support. You can also use their live chat feature on their website or send them a message on Twitter @ComcastCares." That supplementary response can be used to augment the original response, or more helpfully, the enriched response, which would produce an augmented response such as, "If your TV is not working with the Comcast set-top box, it could be due to a number of different issues. First, make sure that the HDMI cable is securely connected to both the set-top box and the TV. If the connection is secure, then you should check that the set-top box is powered on and that the TV input is set to the correct HDMI source. If the problem persists, then you may need to contact Comcast for further assistance."

An enriched and/or augmented response can also include insight enhancement through the use of supplementary prompts. An example might be the CPE identifying its device platform, with a supplementary prompt of "My set-top box is an XiOne model." This supplementary prompt would produce a supplementary response that be integrated with an enriched and/or augmented response produce the following augmented response: "If your TV is not working with the XiOne set-top box, it could be due to a number of different issues. First, make sure that the HDMI cable is securely connected to both the XiOne and the TV. If the connection is secure, then you should check that the set-top box is powered on and that the TV input is set to the correct HDMI source. If that does not work, you can try resetting your XiOne using these steps: 1. While Powering ON the device, press and hold the WPS button on the XiOne box for 10-15 seconds. 2. The color of the LED will change to amber. 3. The Disaster Recovery Image will be displayed on your TV screen. 4. The box will now update firmware and restart. If this does not resolve the problem, you can contact Comcast Xfinity customer service by calling 1-800-Xfinity (1-800-934-6489) or by visiting their website at www.xfinity.com/support. You can also use their live chat feature on their website or send them a message on Twitter @ComcastCares." As noted above, an adaptation and correlation layer can be designed to group and correlate low-level insight outputs to generate higher-level insights via chat engine 135 or dedicated ML models (*e.g*. clustering). From this example, it should be appreciated than an original prompt can be enriched and/or augmented one or more times to produce a much more relevant, actionable response from the chat engine 135. It should be noted, moreover, that this response can be further enhanced, augmented, and/or or enriched (*e.g*., by the CPE 115 and/or one or more remote devices 201) before delivery to the user through the UI, for example, by adding further information such as some of the data described above (*e.g.*, edge network conditions, operator policies, etc.).

As noted, some embodiments provide methods, including without limitation methods that can be implemented by devices or systems such as those described above. Figs. 5A and 5B illustrate an exemplary method 500 and procedures 555 for enhancing a chat prompt based on user query and/or augmenting a response to the prompt. The method 500 might comprise receiving a user query in relation to a network service (block 505). In an aspect, the query is received from the user via an UI, including without limitation those described above. Various embodiments are not limited to any particular UI, and many embodiments can employ several different UI; the selection for a particular implementation of method 500 or similar methods might depend, for example, on the preferences of the user (*e.g*., customer) and/or the circumstances in which the query arises. In some embodiments, the query (perhaps now in the form of an enhanced chat prompt) might be received from CPE or another device; for instance, CPE might receive the user query and produce an enhanced chat prompt, which might be received by a remote device 201, *e.g.,* an edge device 110, which can perform the method 500 as well.

In some embodiments, the method 500 comprises receiving and/or collecting operations information (block 510). In some respects, the operations information can comprise any relevant information about the local network service and/or other prompt parameters, including without limitation information about the operation of CPE or devices attached thereto, local conditions, etc. Such information can include diagnostic information, which can comprise any information that can be relevant or helpful in diagnosing one more particular conditions with the provider's service and/or the customer's use thereof, including without information any condition that prompted the user to transmit a query. In a particular aspect, when the operations information is received by CPE, the operations information might comprise information that is local to the environment of the CPE, because the CPE might not have particular information about operations of the larger edge network or other centralized components of the provider's system. For instance, the method 500 can including receiving (*e.g.,* at CPE device 115, a remote device 201, etc.) diagnostic information, *e.g*., from other connected devices. In some cases, the method 500 can include collecting diagnostic information, *e.g*., from a user (*e.g*., using local response questions), from sensors, etc.

In some embodiments, the method can comprise enhancing a chat prompt (block 515), *e.g*., based at least in part on the operations information. Enhancing a chat prompt can comprise one or more operations, some or all of which can be performed by an ML Engine. In some cases, enhancing a prompt can comprise processing the user query with a machine learning model to produce an actionable prompt (block 520). This prompt might then be enriched and/or augmented (*e.g*., by generating a supplementary prompt), as described in detail above (block 525). In particular aspects, the chat can be enhanced using a variety of different neural engines and/or model aggregation strategies, for example as described in further detail below.

The method might comprise transmitting the enriched chat prompt for processing by a chat engine (*e.g*., 135) (block 530). As noted above, this does not require transmitting the prompt directly to the chat engine. Instead, the enriched prompt might be delivered to a remote device (*e.g*., a remote device 201 further from the user in the edge network 105b or a provider's core network 105a, such as an edge device 110, a core device 120, a cloud server 140, etc.). Such devices might further enhance the prompt using operations information available to those devices (as described in the system above, for example). Such information can include, without limitation, information about performance and/or problems with the network (which might not be visible to devices closer to the user), provider policies (*e.g*., bandwidth limits) that might affect the user, and/or the like. Thus, the method 500 can reiterate one or more times from block 505 (which, in this case, would comprise receiving the enhanced prompt based on the original user query, rather than the original user query itself), *e.g.,* at the remote device. In other cases, the process might be reiterated from block 510 by the same device.

After any number of reiterations of these operations (which are optional in many embodiments) on the appropriate device(s), the enhanced prompt is transmitted (block 530) to the chat engine for a response. If the enhancement of the prompt comprised generating any supplementary prompts, those supplementary prompts can be transmitted as well.

At block 535, then, the method 500 can comprise receiving a response generated by the chat engine, and at block 540, the method 500 can comprise enhancing the response using a second machine learning engine. In some cases, the response might be enhanced using application-specific information, which can include, *inter alia,* some or all of the prompt parameters described above and/or other relevant information. In some cases, as noted above, enhancing the response can comprise augmenting the response (block 545), *e.g*., with one or more supplementary response(s) received from the chat engine; as described, the supplementary response(s) might be triggered by supplementary prompts transmitted in block 530. The method 500 can reiterate from block 535 one or more times to further enhance the response.

The enhanced and/or augmented response can then be provided for presentation to the user (block 550). In some cases, providing the response can include providing the response directly to a user, *e.g*., through a user interface of CPE. In other cases, providing the response might comprise providing the prompt to another device, such as a remote device 201 (*e.g.,* an edge device 110) in the network in closer proximity to the user and/or eventually to CPE 115, which can then present the response to the user, *e.g*., through an appropriate UI. In some cases, the same UI that received the original query (*e.g*., voice response unit, chat session, etc.) is used to provide the response. In other cases, a different UI (*e.g*., instructions and/or explanations provided on a display screen or television attached to the CPE). As noted above, these are merely examples, and different embodiments are not limited to any particular UI. Providing a response to the user can include providing the user with information that can be used to improve the performance of the service provided to the user. In some aspects, the method 500 can also perform automated steps that can improve the performance of the service. Merely by way of example, in some cases, if the user's Internet service is poor, the system might change a configuration (e.g., wireless channels used to carry WiFi signals) in the user's CPE and/or instruct the user to change settings in a user device. In other cases, as noted herein, the system might be able to resolve an incorrect configuration elsewhere in the network, e.g., changing parameters in a software-defined network (SDN) control plane of a router, etc. to better manage traffic and provide better network performance.

Enhancing a prompt (block 515) or a response (block 540) with an ML Engine can employ a variety of different options, including without limitation different ML Engines, different ML models, and/or different multi-model switching strategies. Examples of some different options are illustrated by blocks 560-595, which are discussed below. Any of such options (which can include different ML engines and/or different multi-model switching strategies) can be used in the various devices, methods, and/or operations described above.

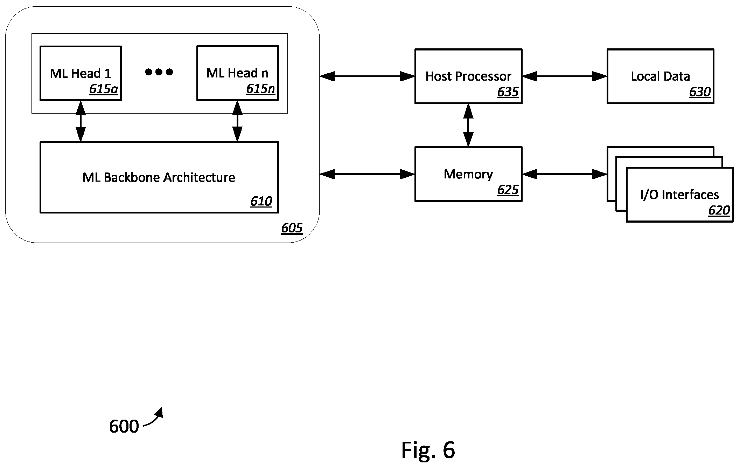

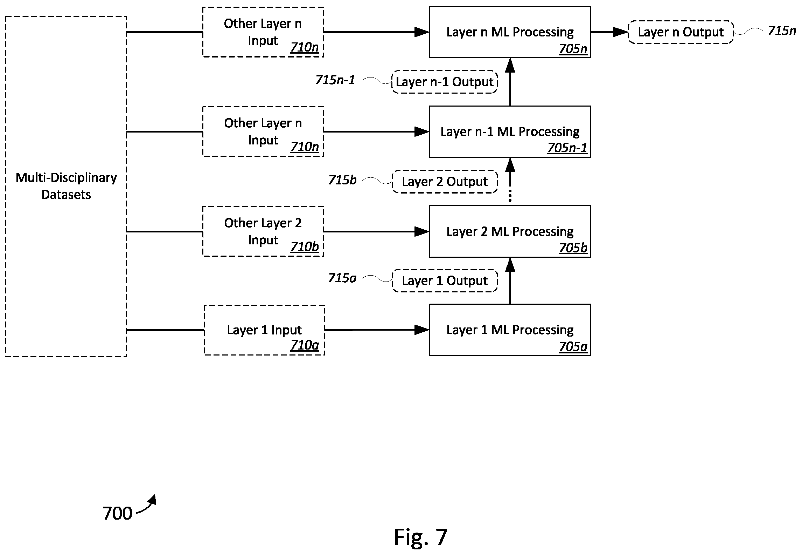

For example, in some embodiments, at least one of the ML Engines might comprise a multi-head ML model, examples of which are illustrated by Figs. 6 and 7. As used herein, the term "multi-head machine learning model" means any ML model that includes two or more ML models as "heads" (or sub-models), each of which might perform some or all of the processing for a particular task. For instance, local models deployed on each level of the operator network hierarchy (*e.g*., CPE 115, edge device 110, core devices 120, cloud server 140, etc.) can be created as the multi-heads of a common backbone. In other embodiments, a single ML Engine 210 might comprise and/or run multiple heads on its own (and/or in conjunction with one or more heads running on another device). In this disclosure, within the context of a multi-head model, the term "model" and "head" are used interchangeably unless the context indicates that the term "model" is use to refer specifically to the multi-head model itself. Fig. 6 illustrates one such arrangement 600, in which the ML multi-head ML model 605 includes a ML backbone architecture 610. In some embodiments, the backbone 610 can be trained with common and/or pre-generated prompts and datasets, which can represent the baseline or "normal" conditions of the devices and network. On the other hand, in some embodiments, different ML models (*e.g*., 605) can be trained with application-specific and dynamic prompts and datasets, which represent the special or "abnormal" conditions (*e.g*., channel anomaly and various types of channel impairments) of the devices and network. For the model input and output, the multi-head models can exchange information with external I/O interfaces 620 (*e.g*., via internal memory 625) and/or local functional elements/data 630 (*e.g*., via host processor 635). In particular, the local device attributes, profiles and status can be provided to the multi-head model 605 by the host processor 635.

In an aspect, the model 605 and/or the heads 615 can be trained with respect to a mix of tasks and applications, using prompts and datasets from multiple disciplines. The outputs from the model 605 and/ or heads 615 can include at least the following types:
a. Binary (true/false) or discrete (*e.g*., integer numbers) values. For instance, such outputs can be sent to a higher functional layer (*e.g*. local, in another device, and/or in the cloud) to signal the need of further ML processing. For instance, the need for further processing by a higher level can be expressed as a binary value. If further processing is needed, the level of further processing needed can be expressed as an integer, based on the device's dynamic conditions and actions taken, such as diagnostic and/or remedial steps performed.
b. Filtered or pre-processed values that are sent to the higher functional layer to be used as the input for further ML processing, which can include, for example processing in one or more remote devices 201 (*e.g*., edge device 110, core device 120, and/or cloud server 140) to correlate inputs from multiple devices to localize network issues.

Different models 605 and/or heads 615 can be arranged to run sequentially and/or in parallel, in support of adaptive multi-model switching, *e.g*., as described in detail below. As used herein, "adaptive multi-model switching" means any technique or implementation in which a plurality of models are available to an ML engine or environment, and in which a choice to use one or more models over other available models is based on a particular processing task at hand. As used herein, the term "processing task" means any query, prompt, assignment, job or task provided to an ML engine to answer, enhance, enrich, supplement, augment, respond to, solve, infer, complete, or otherwise perform. Embodiment-specific examples of processing tasks can include, without limitation, all of the prompt and response enhancement techniques described herein (or portions thereof), the generation of chat prompts and responses, and/or the like.

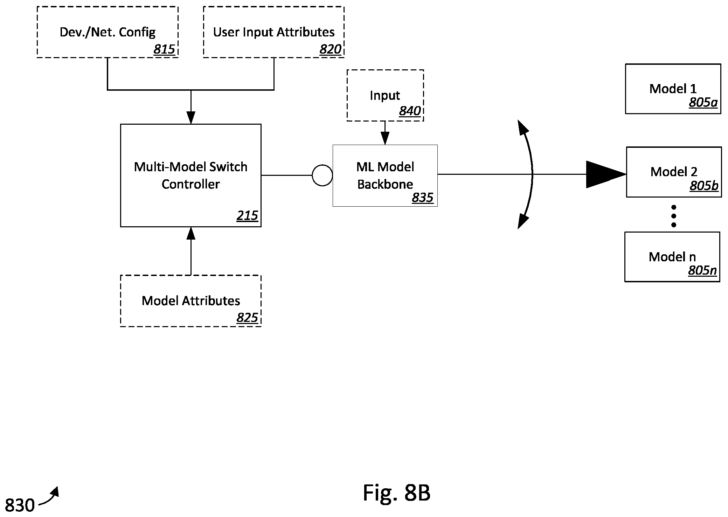

In particular embodiments, the model 605 and/or heads 615 can be arranged to enable hierarchical ML processing, an example of which can be found in Fig. 7. Fig. 7 illustrates hierarchical processing by a plurality of ML models (or heads) 705. As an example, for hierarchical ML processing and fault diagnostics, one of the multi-head models (*e.g*., 705a, further described in the context of Figs. 8B, 9, and 10) can be trained to detect the high-level and general channel anomaly, for example using quadrature amplitude modulation (QAM) and/or modulation error ratio (MER) datasets (depending on the channel types), while another such model (*e.g*., 705b) can be trained to classify the specific and detailed channel impairments that triggered the anomaly condition, using a wide range of datasets for PHY, MAC, TCP/IP and application layers of the OSI data model.

The multi-head models 705 can be trained/re-trained, *e.g*., with reinforcement learning using feedback represented by application-specific reward models. For instance, the multi-head models 705 can be considered as the policies for various diagnostic tasks and services. The inputs to these policies can include a variety of state information for the device/network environments; the outputs from these policies represent desirable environmental state; and the mapping from the inputs to the outputs represent the actions taken per the policies. Within this conceptual framework, the reward models can be trained with the datasets and preference scores that can be generated by technical experts of relevant disciplines, operator technicians, and device local capabilities, status and configurations.

In many embodiments, multiple ML models are stored and made available to the ML Engines on both the local device (*e.g*., CPE 115, edge device, etc. depending on the context) and any appropriate remote devices 201 (*e.g*., edge devices 110, core devices 120, cloud server 140, etc.). In an aspect, some or all of the ML Engines can be configured to employ adaptive multi-model switching, *e.g*., by switching among and running different models, adapting to the user input as well as the status and configuration of the device and network. One example of such switching is mode hopping between a plurality of models.

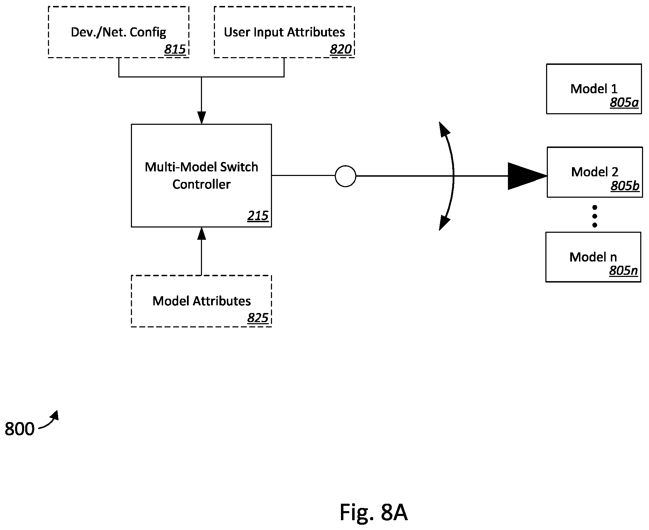

Fig. 8A illustrates an example of an ML Engine 800 configured to operate in a model-hopping mode. As used herein, the term "hopping" refers to a technique of switching between two or more different ML models during the course of a processing task. The hopping might be controlled by a strategy arranged *a priori* and/or it might depend on circumstances encountered during the processing of the processing task. As noted above, a MMSC 215 often controls the operation of the ML Engine 800. In this case, the MMSC 215 controls the model hopping behavior of the engine 810. The hopping decision by MMSC 215 among different models 805 can be determined by factors that can include, *inter alia,* device and network configuration and status 815, user input attributes 820, and/or model attributes 825. Network configuration and status can include information about the application, the user's local network, CPE 115, user devices 145, the provider network 105, operator policies, and/or the like. Such information can include identification and/or descriptive information (*e.g*., the type of user network, identification or description of other devices on the user LAN, WiFi channels used and/or SNR of such channels if the user LAN includes a wireless LAN, identification of any provider devices and/or transmission lines involved in the delivery of service to the user, etc.) and/or status information (*e.g*., any status codes, normal or abnormal, produced by any of the devices on the user LAN and/or the provider's network 105, unavailability and/or reduced performance of any such devices, any known outages of the provider's network, etc. User input attributes can include any information about the user (*e.g*., identity, subscription status, userid, etc.) and/or the user input itself (*e.g*., the query), including without limitation the expression of the input (*e.g*., typed text, spoken text, video, image, etc.) indicators of user sentiment (gestures, facial expressions, etc.) and/or the like. Model attributes can include any information about the models selected (and/or models not selected) for use in the ML engine, such as known strengths and weaknesses of such models for different applications, resource requirements and/or absolute or relative execution times of such models, etc.).

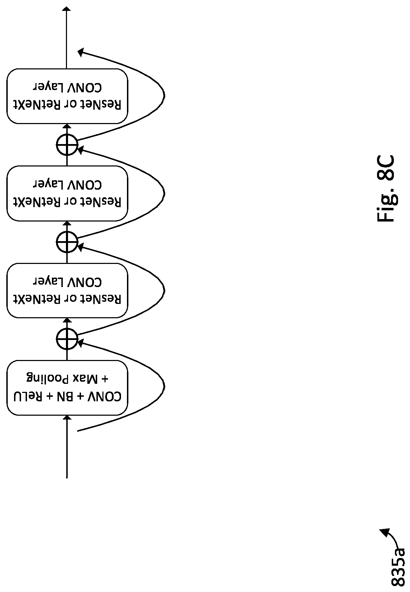

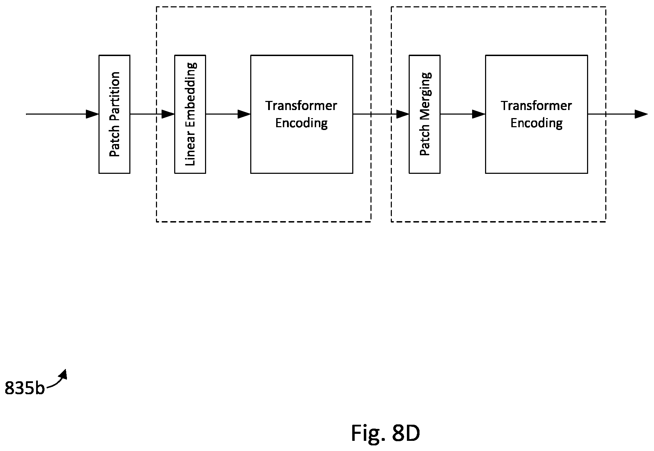

In some implementations, implementation, multiple ML models, *e.g*., Model 1 (805a) to Model n (805n) can be used for different application tasks (*e.g*., detection and classification of events, anomalies, conditions, etc.). As illustrated by the configuration 830 of Fig. 8B, multiple models (or in this case, heads) 805 may share the same backbone structure 835 (perhaps with different parameters). For example, as illustrated in Fig. 8C, the backbone structure 835 might comprise a CNN (*e.g*., a residual network (ResNet) model), which might be to derive multiple auxiliary models for both detection and classification tasks. Similarly, the backbone structure, as illustrated by Fig. 8D, might use a single transformer model (*e.g.* a transformer encoder) as the backbone to derive multiple auxiliary models for such tasks. In these cases, THE MMSC 215 might configure the engine 800 for model hopping among the auxiliary models that share the same backbone (*e.g*., CNN or transformer). These auxiliary models can be represented by different "heads" 805 (*e.g.* a detection head 805a and a classification head 805b), as illustrated in fig. 8B.

As noted above, in some embodiments, the MMSC 215 makes model hopping decisions based on factors that can include, *inter alia,* application-specific characteristics, device and network configuration and status, user input attributes, model attributes, and the like. Figs. 9 and 10 illustrate an example of a situation in which model hopping can be useful. A a DOCSIS cable broadband edge network, which has a combination of single-carrier quadrature amplitude modulation (QAM) channels and Orthogonal Frequency-Division Multiplexing (OFDM) downstream channels. In such a situation, two separate ML models can be trained for these two types of channels, respectively, in order to detect and classify anomaly conditions of these channels for network diagnostic purposes.

The two ML models corresponding to the two channel types (QAM and OFDM) can have different model attributes. For instance, in an OFDM channel, anomalies can present as receive MER (RxMER), which is the ratio of average symbol power to average error power, which is a scalar value. For this type of anomaly, the MMSC 215 might select a model, such as the exemplary model 900 of Fig. 9, which can be an anomaly detector that has an autoencoder architecture based on convolutional neural network CNN 905 and a transpose CNN 910, which can detect anomalies by quantification. On the other hand, in a QAM channel, which anomalies appear as imprecise constellation points in a constellation map, and the anomalies can be classified as different qualitative properties. In this case, the MMSC 215 might select a model such as the exemplary model 1000 of Fig. 10, which is an anomaly classifier that has an architecture based on fully-connected (FC) neural network 1005, as exemplified, and is able to classify the detected anomaly based on input patterns 1010 into several general classes 1015 with different qualitative properties, such as "signal with high/low attenuation" (1015a), "signal with high/low interference" (1015b) , "signal with high/low attenuation in addition to high/low interference," (1015c) etc.

During the runtime of the cable modem CPE, these two models are stored locally and/or made available to the local ML Engine on the CPE. The MMSC 215 can implement a channel scanning schedule to scan all downstream channels (both single-carrier QAM and OFDM channels) for anomaly conditions, hopping to and executing the ML model (in the ML Engine) corresponding to the channel type under scanning. The ML anomaly detection/clarification results across all channels then can analyzed to provide diagnostic input (*e.g*. for the local CPRE).

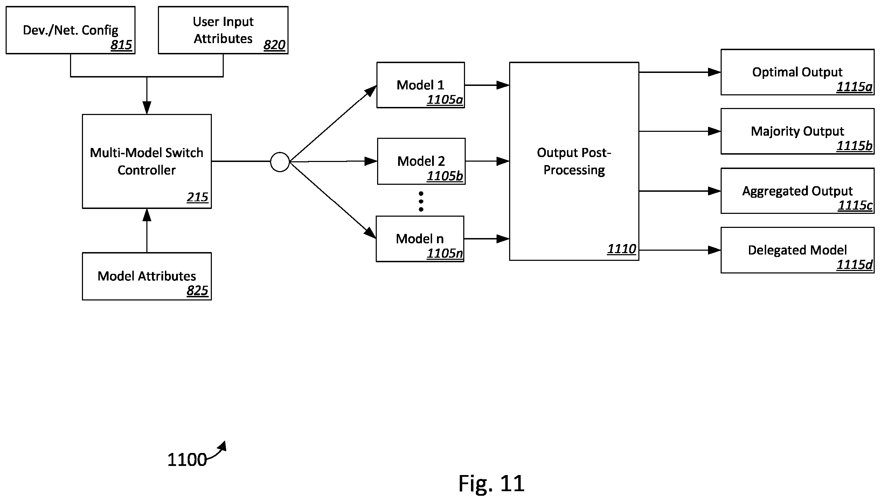

In some cases, the multi-model switching performed by various embodiments comprises running a plurality of models in parallel (block 570). Unless the context dictates otherwise,, the term "parallel" is used broadly herein to refer to the operation of a plurality of processes or events that are not performed strictly in serial fashion. Fig. 11 illustrates an exemplary parallel multi-model switching technique 1100, in which The MMSC 215 schedules multiple relevant ML models 1105 to be run in parallel by the ML Engine. In various embodiments, the parallel execution can be realized by a multi-tasking scheme such as multi-tasking on the model layer level or multi-tasking on the model level. An output post-processing block 1110 can process the output of each of the models using various strategies 1115 (which can depend on implementation-specific characteristics) to produce a collective output from the parallel models 1105. Examples of such strategies can include, but are not limited to, optimal output selection 1110a, output majority voting 1110b, output aggregation 1110c, and/or model delegation 1110d.

Thus, in some embodiments, running a plurality of models in parallel comprises employing an optimal output selection strategy (block 575). For example, all parallel models might be executed to completion for each input data. When the optimal output selection strategy is employed, the output selected to be the collective output from the multi-model switching technique is the optimal output among all outputs from these models, using appropriate optimization criterion based on the nature of the relevant application, input data, etc. In some embodiments, running a plurality of models in parallel comprises employing an output aggregation strategy (block 580). When using this strategy, all parallel models can be executed to completion for each input data. The collective output is synthesized aggregately from all outputs of these models. In some cases, the aggregation of the different outputs might be weighted according to application-specific factors and/or input data.

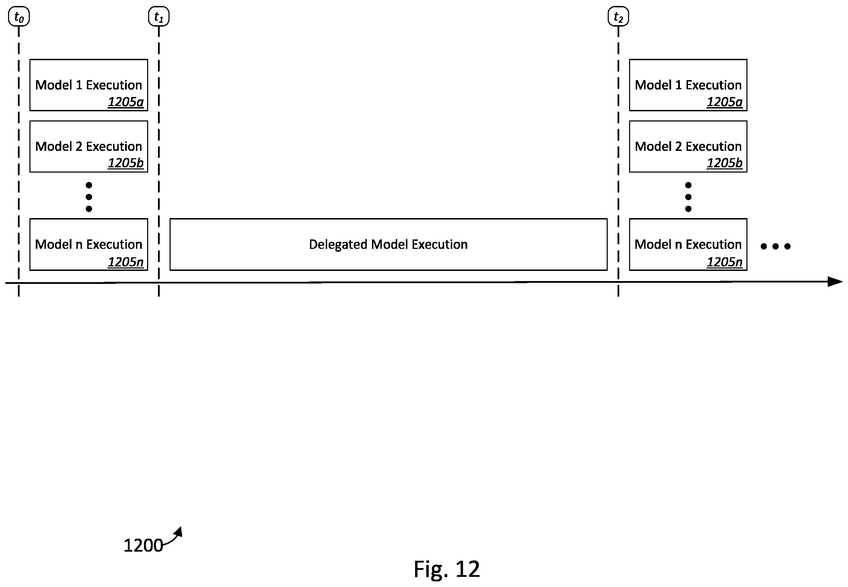

In some embodiments, running a plurality of models in parallel might comprise employing a model delegation strategy (block 585), in which the responsibility for producing the collective outlet of a set models is delegated to one or more specific models of the set; this delegation can be relatively temporary or relatively permanent, and it can often be based on an assessment of which model exhibits the best performance (*e.g*., in a sample or subset of the processing task at hand). Fig. 12 provides a timeline 1200 of an example using this strategy. In this example, at time *t₀* , the MMSC 215 (not shown in Fig. 12) executes parallel models 1205 for one or more sets of initial input data. In different aspects, the MMSC 215 can execute one model at a time until the determination is made and/or execute all models to completion before designating the delegated model. In either case, based on the analysis of the corresponding outputs from these models, the MMSC 215 delegates, at time *t₁*, one of the parallel models to provide the collective output for the ML Engine. Once the determination of the delegated model has been accomplished, the rest of the models (other than the designated one) can be deactivated, until the MMSC 215 (*e.g*., at time *t₂*) determines that it should designate a different delegated model (if needed) and executes the models 120 in parallel once again, reiterating the process.

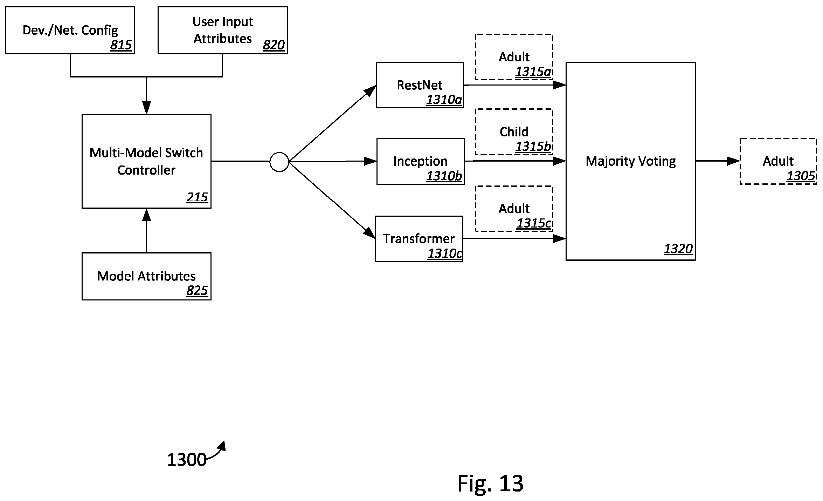

In some embodiments, running a plurality of models in parallel comprises employing an output majority voting strategy (block 590), in which the outputs of a plurality of models or heads are compared to determine the collective output of the models. Fig. 13 illustrates an example 1300 of output selection using a majority voting strategy to determine a collective output 1305. In this example, three well-known image classification models, a residual network (ResNet) model 1310a, an Inception model 1305b, and a transformer model 1305c are employed to analyze an image of a person (who might be, for example, a user submitting a query by video). The ResNet model 1310a determines that the person is an adult and provides that output 1315a. The Inception model 1310b, on the other hand, determines that the person is a child and provides that output 1315b, while the transformer model 1310c determines that the person is an adult and provides that output 1315c These output 1315 are provide to majority voting logic 1320. Based on the fact that "adult" received two votes (*i.e.,* outputs 1315a and 1315c) while "child" received only one vote (output 1315b), the majority voting logic selects "adult" as the collective output from the parallel models 1305. (It should be noted that, while this example 1300 includes only three voting models, other embodiments might include more or fewer models. More generally, any of the strategies described herein can employ, in accordance with various embodiments, any number of models of any appropriate type (which can depend, as noted, on the nature of the application, local conditions, etc.).

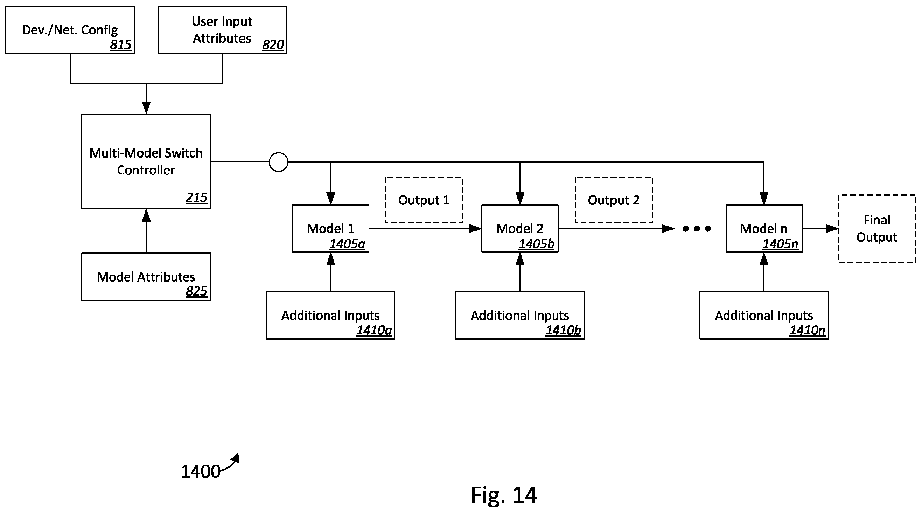

In addition to (or as an alternative to) running models in parallel, multi-model switching can comprise running a plurality of models serially (block 595). Fig. 14 illustrates one example of a ML Engine 1400 running multiple models serially. In this mode, the MMSC 215 selects and schedules multiple relevant ML models 1405 to execute in series by the ML engine, with prior model's output along with any other necessary information 1410 being used for the input to the model's successor model in the series, as illustrated. For the case where the models are distributed between a local device (*e.g*., CPE 135) and one or more remote devices (*e.g*., remote devices 201, including, *e.g*., edge devices 110, core devices 120, and/or a cloud server 140), the MMSC 215 is also responsible for coordinating the local and remote ML Engines. In some cases, the selection and/or ordering of the heads and/or models 1405 by the MMSC 215 can be determined by factors such as device and network configuration and status 815, user input attributes 820, and/oi model attributes 825.

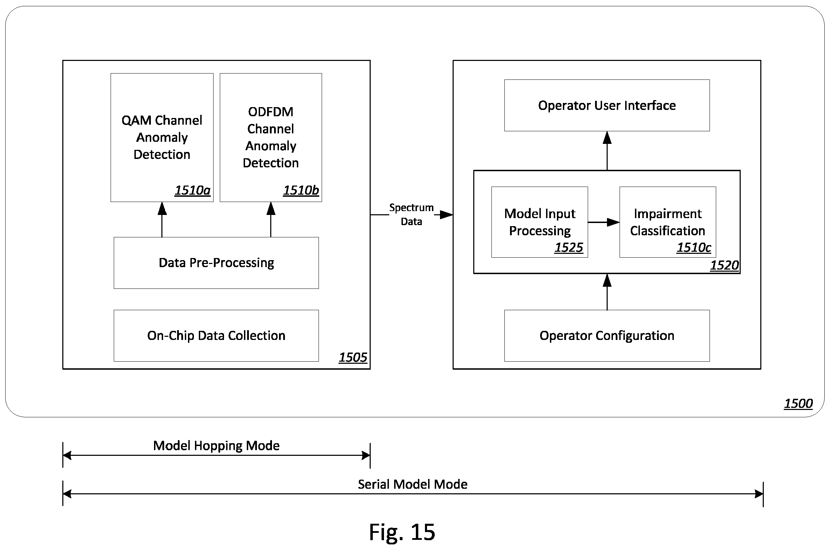

In some embodiments, the serial model mode can be used in combination with other modes, such as the various parallel execution modes and strategies described above. For instance, a model output in the series can be produced from the hopping mode or the parallel mode. Returning again to the example of a DOCSIS cable broadband edge network, Fig. 15 illustrates an exemplary SoC device 1500, in which an anomaly detection/classification ML engine 1505 executes ML models for QAM and OFDM channel anomaly detection/classification, 1510a, 1510b, respectively, locally on the SoC device 1500 using a model hopping mode (*e.g*., as described above). Under the coordination of the MMSC 215 (not shown in Fig. 15), the anomaly detection/classification result, along with channel spectrum data is sent as the input to another on-chip ML Engine 1520 for impairment classification. After the input has been processed with a preprocessor 1525 the ML Engine 1520 runs an impairment classification ML model 1510c that uses spectrum analysis in order to further determine the type and cause of the channel anomaly. Thus, two of the models 1510a, 1510b are executed in parallel, while a third model 1510c is executed serially after execution of the first two models 1510a, 1510b. The output from the impairment classification model 1510c can be used, *e.g*., as input to a CPRE function as described above, *e.g*., with respect to Figs. 2-4, to generate an enhanced prompt and/or response.

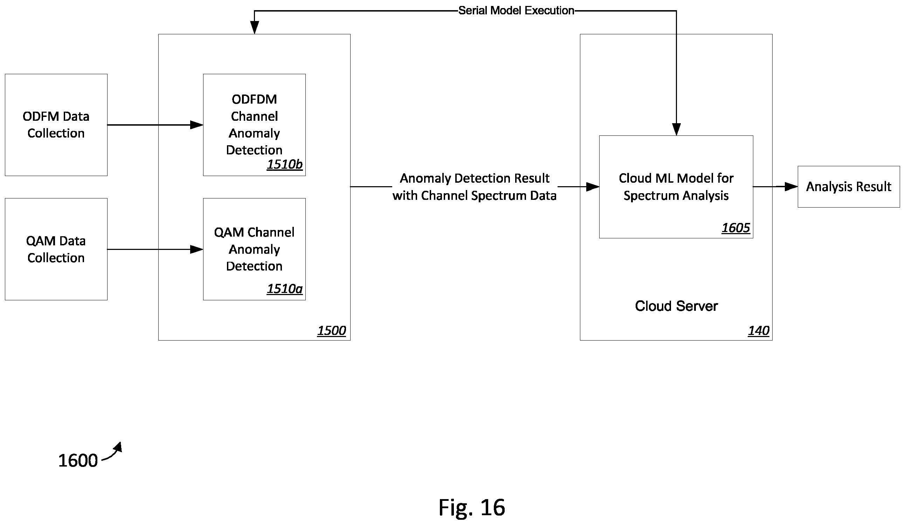

Fig. 16 illustrates an alternative configuration 1600 of this same arrangement, in which the first two models 1510a, 1510b, are executed in parallel on the SoC 1500, while the impairment classification model 1605 is executed on a cloud system. In some cases, the output from the cloud-based model 1605 can be transmitted back to the SOC for further use (*e.g*., as input to a CPRE for prompt/response enhancement. While Fig. 16 illustrates the impairment classification model 1605 running on a cloud-based model (*e.g*., executing on a cloud server 140), the same principle can be applied to run different models in serial (or even in parallel) on a local device (*e.g*., CPE 115 or an SoC therein), and one or more remote devices (*e.g*., remote devices 201).

### Exemplary Embodiments

Certain exemplary embodiments are described below. Each of the described embodiments can be implemented separately or in any combination, as would be appreciated by one skilled in the art. Thus, no single embodiment or combination of embodiments should be considered limiting.

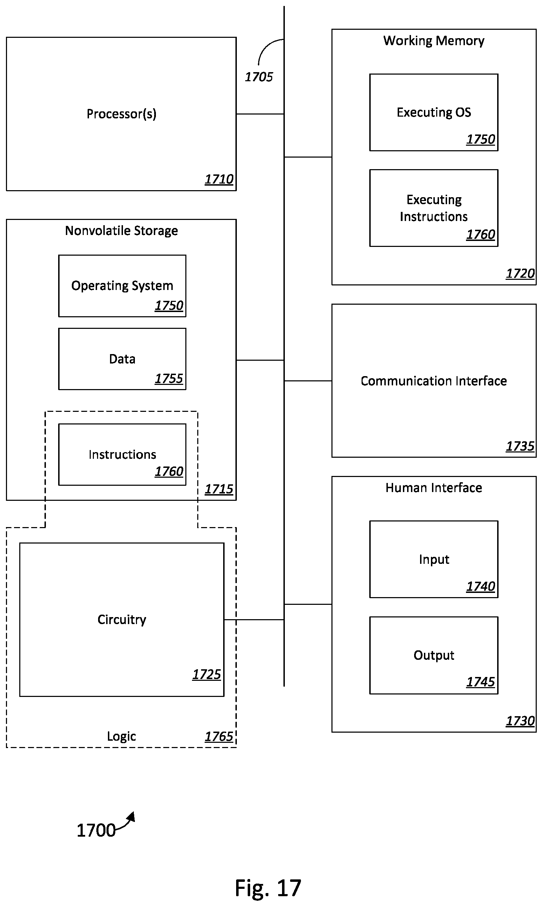

Fig. 17 is a block diagram illustrating an example of a device 1700, which can function as described herein, including without limitation serving as a user device 245, CPE 115, an edge device 110, a core device 120, a cloud server 140, and/or any other computer system (or a component of any of these) in accordance with various embodiments, and/or performing some or all operations of the methods and procedures described herein. No component shown in Fig. 17 should be considered necessary or required by each embodiment. For example, many embodiments may not include a processor and/or might be implemented entirely in hardware or firmware circuitry. Similarly, many embodiments may not include input devices, output devices, or network interfaces.

With that prelude, as shown in Fig. 17, the device 1700 may include a bus 1705. The bus 1705 includes one or more components that enable wired and/or wireless communication among the components of the device 1700. The bus 1705 may couple together two or more components of Fig. 17, such as via operative coupling, communicative coupling, electronic coupling, and/or electric coupling. Such components can include a processor 1710 non-volatile storage 1715, working memory (*e.g*., system dynamic random-access memory (DRAM)) 1720, and/ or circuitry 1725. In some cases, the system 1700 can include human interface components 1730 and/or a communication interface 1735.

While these components are displayed as integrated within the device 1700, certain components might be located external from the device 1700. As such, the device 1700 might include, instead of or in addition to the components themselves, facilities for communicating with such external devices, which therefore can be considered part of the device 1700 in some embodiments.

Merely by way of example, the non-volatile storage 1715 can include a hard disk drive (HDD), a solid-state drive (SSD), and/or any other form of persistent storage (*i.e*., storage that does not require power to maintain the state of the stored data). While such storage often is incorporated within the device 1700 itself, such storage might be external to the device 1700 and can include external HDD, SSD, flash drives, or the like, as well as networked storage (*e.g*., shared storage on a file server, etc.), storage on a storage area network (SAN), cloud-based storage, and/or the like. Unless the context dictates otherwise, any such storage can be considered part of the device 1700 in accordance with various embodiments.

Similarly, the human interface 1730 can include input components 1740 and/or output components 1745, which can be disposed within the device 1700, external to the device 1700, and/or combinations thereof. The input components 1740 can enable the device 1700 to receive input, such as user input and/or sensed input. For example, the input components 1740 may include a touch screen, a keyboard, a keypad, a mouse, a button, a microphone, a switch, a sensor, a global positioning system sensor, an accelerometer, a gyroscope, and/or an actuator. In some cases, such components can be external to the device 1700 and/or can communicate with components internal to the device 1700 such as input jacks, USB ports, Bluetooth radios, and/ or the like. Similarly, the output component 1745 can enable the device 1700 to provide output, such as via a display, a printer, a speaker, and/or the like, any of which can be internal to the device 1700 and/or external to the device but in communication with internal components, such as a USB port, a Bluetooth radio, a video port, and/or the like. Again, unless the context dictates otherwise, any such components can be considered part of the device 1700 in accordance with various embodiments.

From these examples, it should be appreciated that various embodiments can support a variety of arrangements of external and/or internal components, all of which can be considered part of the device 1700. In certain embodiments, some or all of these components might be virtualized; examples can include virtual machines, containers (such as Docker containers, etc.), cloud computing environments, platform as a service (PAAS) environments, and/or the like.

In an aspect, the nonvolatile storage 1715 can be considered a non-transitory computer readable medium. In some embodiments, the nonvolatile storage 1715 can be used to store software and/or data for use by the device 1700. Such software/data can include an operating system 1750, data 1755, and/or instructions 1760. The operating system can include instructions governing the basic operation of the device 1700 and can include a variety of personal computer or server operating systems, embedded operating systems, and/or the like, depending on the nature of the device 1700. The data 1755 can include any of a variety of data used or produced by the device 1700 (and/or the operation thereof), such as media content, databases, documents, and/or the like. The instructions 1760 can include software code, such as applications, object code, assembly, binary, etc.) used to program the processor 1710 to perform operations in accordance with various embodiments. In an aspect, the operating system 1750 can be considered part of the instructions 1760 in some embodiments.

**The** processor 1710 can include one or more of a central processing unit, a graphics processing unit, a microprocessor, a controller, a microcontroller, a digital signal processor (DSP), programmable logic (such as a field-programmable gate array (FPGA) an erasable programmable logic device (EPLD), or the like), an application-specific integrated circuit (ASIC), a system on a chip (SoC) and/or another type of processing component. The processor 1710 can be implemented in hardware, firmware, or a combination of hardware, firmware and/or software. In some implementations, the processor 1710 includes one or more processors capable of being programmed to perform one or more operations or processes described elsewhere herein.

For example, in some embodiments, the device 1700 can comprise logic 1765. Such logic can be any sort of code, instructions, circuitry, or the like that can cause the device 1700 to operate in accordance with the embodiments herein (*e.g*., to perform some or all of the processes and/or operations described herein). Merely by way of example, the logic 1765 can include the instructions 1760, which might be stored on the nonvolatile storage 1715 as noted above, loaded into working memory 1720, and/or executed by the processor 1710 to perform operations and methods in accordance with various embodiments. In an aspect, these instructions 1760 can be considered to be programming the processor 1710 to operate according to such embodiments. In the same way, the operating system 1750 (to the extent it is discrete from the instructions 1760) might be stored on the nonvolatile storage 1715, loaded into working memory 1720, and/or executed by a processor 1710.

Alternatively, and/or additionally, logic can include the circuitry 1725 (*e.g*., hardware or firmware), which can operate independently of, or collaboratively with, any processor 1710 the device 1700 might or might not have. (As noted above, in some cases, the circuitry 1750 itself can be considered a processor 1710.) The circuitry 1725 might be embodied by a chip, SoC, ASIC, programmable logic device (FPGA, EPLD, etc.), and/or the like. Thus, some or all of the logic enabling or causing the performance of some or all of the operations described herein might be encoded in hardware or firmware circuitry (*e.g*., circuitry 1750) and executed directly by such circuitry, rather than being software instructions 1760 loaded into working memory 1720. (In some cases, this functionality can be embodied by hardware instructions). Thus, unless the context dictates otherwise, embodiments described herein are not limited to any specific combination of hardware, firmware, and/or software.

The device 1700 can also include a communication interface 1735, which can enable the device 1700 to communicate with other devices via a wired (electrical and/or optical) connection and/or a wireless (RF) connection. For example, the communication interface 1760 may include one or more RF subsystems (such a Bluetooth subsystem, such as those described above, for example, a Wi-Fi subsystem, a 5G or cellular subsystem, etc.). Additionally or alternatively Some such systems can be implemented in combination, as discrete chips, as SoCs, and/or the like. The communication interface 1735 can further include a modem, a network interface card, and/or an antenna. In some cases, the communication interface 1730 might comprise a plurality of I/O ports, each of which can be any facility that provides communication between the device 1700 and other devices; in particular embodiments, such ports can network ports, such as Ethernet ports, fiber ports, etc. Other embodiments can include different types of I/O ports, such as serial ports, pinouts, and/or the like. Depending on the nature of the device 1700, the communication interface 1735 can include any standard or proprietary components to allow communication as described in accordance with various embodiments.

### Conclusion

While the foregoing description employed examples related to the provision of services, and particular broadband services, embodiments are not limited to these examples. The principles and functionality disclosed herein can be applied across many domains in different embodiments of the invention. Merely by way of example, embodiments can be used to provide organizations with internally focused (*e.g*., directed to support personnel) and/or externally-focused (*e.g*., directed to customers, third parties, etc.) diagnosis and/or repair of any type of network or computer system, including for example, large LANs, enterprise networks. Moreover, various embodiments can be deployed in any situation that could benefit from enhanced communication between a first party (*e.g*., a customer, internal support personnel, etc.) and a second party, especially when that second party is an automated service, chat engine, etc. Thus, unless a claim herein is specifically limited to a particular field of use (*e.g*., broadband networks), the claim should not be interpreted as being limited to that field.

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the implementations to the precise form disclosed. For example, as noted above, the methods and processes described herein may be implemented using software components, firmware and/or hardware components, (including without limitation processors, other hardware circuitry, custom integrated circuits (ICs), programmable logic, etc.) and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods does not limit the implementations unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (*e.g*., if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (*i.e*., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (*e.g*., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

## Claims

1. A method (500), comprising:
receiving (505), at a device (1700) comprising a processor (1710), a user query in relation to a network service from a user;
receiving (510), at the device (1700), operations information about the network service;
enhancing (515), with the device (1700), a chat prompt, using a first machine learning engine, based at least in part on the operations information and the user query;
transmitting (530), with the device (1700), the enriched chat prompt for processing by a general purpose conversational artificial intelligence (135);
receiving (535), with the device (1700), a response generated by the general purpose conversational artificial intelligence (135);
enhancing (540), with the device (1700), the response using a second machine learning engine; and
providing (550), from the device (1700) the enhanced response for presentation to the user.

2. The method (500) of claim 1, wherein the operations information comprises performance information about customer premises equipment (115) associated with the user, and wherein the method (500) further comprises modifying a configuration of the customer premises equipment (115), based at least in part on the enhanced response, to improve performance of the customer premises equipment (115).

3. The method (500) of claim 1 or 2, wherein the device (1700) is customer premises equipment (115) in a broadband network.

4. The method (500) of claim 3, wherein receiving (505) a user query comprises receiving the user query from another device.

5. The method (500) of claim 4, wherein the other device is customer premises equipment (115) in a broadband network.

6. The method (500) of any one of the claims 1 to 5, wherein enhancing (515) the chat prompt comprises enriching the prompt with operational information; and the response is an enriched response.

7. The method (500) of any one of the claims 1 to 6, wherein enhancing (515) the chat prompt comprises generating (525) a supplementary prompt; and
the method (500) further comprises:
transmitting the supplementary prompt for processing by the general purpose conversational artificial intelligence (135);
receiving a supplementary response; and
augmenting the response with the supplementary response.

8. The method (500) of any one of the claims 1 to 7, wherein enhancing (515) the response comprises enhancing the response with application-specific data.

9. The method (500) of any one of the claims 1 to 8, wherein at least one of the machine learning engines comprises a multi-head machine learning model.

10. The method (500) of claims 9, wherein the multi-head machine learning model comprises a backbone network trained with common datasets and a plurality of multi-head models trained with application specific datasets.

11. The method (500) of any one of the claims 1 to 9, wherein at least one of the machine learning engines employs adaptive multi-model switching.

12. The method (500) of claim 11, further comprising at least one of the following features:
wherein the multi-model switching comprises hopping between a plurality of models;
wherein the multi-model switching comprises running a plurality of models in parallel;
wherein in particular running a plurality of models in parallel comprises at least one of:
(a) employing an optimal output selection strategy;
(b) employing an output majority voting strategy;
(c) employing an output aggregation strategy;
(d) employing a model delegation strategy; and
wherein the multi-model switching comprises running a plurality of models serially.

13. The method (500) of any one of claims 1 to 12, wherein processing by the general purpose conversational artificial intelligence (135) comprises, at a second device:
receiving the enhanced chat prompt from the device (1700);
receiving second operations information about the network service;
further enhancing the chat prompt, using at least a third machine learning engine, based at least in part on the second operations information;
transmitting the further enriched chat prompt for processing by the general purpose conversational artificial intelligence (135);
receiving a response generated by the general purpose conversational artificial intelligence (135);
enhancing the response using a fourth machine learning engine; and
providing the enhanced response to the device (1700).

14. A non-transitory computer-readable medium (1715) comprising instructions (1760) that, when executed by one or more processors (1710) of a device (1700), cause the device (1700) to carry out the method of any of claims 1 to 13.

15. A device (1700), comprising:
a network interface (1735);
one or more processors (1710); and
logic, the logic comprising instructions (1760) stored on a non-transitory computer readable medium, wherein the instructions (1760), when executed by the one or more processors (1710) of the device (1700), cause the device (1700) to carry out the method of any of claims 1 to 13.

## Patentansprüche

1. Ein Verfahren (500), aufweisend:
Empfangen (505), an einer Vorrichtung (1700), die einen Prozessor (1710) aufweist, einer Benutzeranfrage in Bezug auf einen Netzwerkdienst von einem Benutzer;
Empfangen (510), an der Vorrichtung (1700), einer Betriebsinformation über den Netzwerkdienst;
Verbessern (515), mit der Vorrichtung (1700), einer Chat-Aufforderung unter Verwendung einer ersten Maschinenlern-Engine basierend zumindest teilweise auf der Betriebsinformation und der Benutzeranfrage;
Übertragen (530), mit der Vorrichtung (1700), der angereicherten Chat-Aufforderung zur Verarbeitung mittels einer universellen dialogfähigen künstlichen Intelligenz (135);
Empfangen (535), mit der Vorrichtung (1700), einer Antwort, die mittels der universellen dialogfähigen künstlichen Intelligenz (135) erzeugt wird;
Verbessern (540), mit der Vorrichtung (1700), der Antwort unter Verwendung einer zweiten Maschinenlern-Engine; und
Bereitstellen (550), von der Vorrichtung (1700), der verbesserten Antwort zur Darstellung für den Benutzer.

2. Das Verfahren (500) gemäß Anspruch 1, wobei die Betriebsinformation eine Performance-Information über eine Kundenstandorteinrichtung (115) aufweist, die mit dem Benutzer assoziiert ist, und wobei das Verfahren (500) weiter aufweist ein Modifizieren einer Konfiguration der Kundenstandorteinrichtung (115) basierend zumindest teilweise auf der verbesserten Antwort, um die Performance der Kundenstandorteinrichtung (115) zu verbessern.

3. Das Verfahren (500) gemäß Anspruch 1 oder 2, wobei die Vorrichtung (1700) eine Kundenstandorteinrichtung (115) in einem Breitbandnetzwerk ist.

4. Das Verfahren (500) gemäß Anspruch 3, wobei das Empfangen (505) einer Benutzeranfrage ein Empfangen der Benutzeranfrage von einer anderen Vorrichtung aufweist.

5. Das Verfahren (500) gemäß Anspruch 4, wobei die andere Vorrichtung eine Kundenstandorteinrichtung (115) in einem Breitbandnetzwerk ist.

6. Das Verfahren (500) gemäß einem der Ansprüche 1 bis 5, wobei das Verbessern (515) der Chat-Aufforderung ein Anreichern der Aufforderung mit einer Betriebsinformation aufweist; und die Antwort eine angereicherte Antwort ist.

7. Das Verfahren (500) gemäß einem der Ansprüche 1 bis 6, wobei das Verbessern (515) der Chat-Aufforderung ein Erzeugen (525) einer zusätzlichen Aufforderung aufweist; und
das Verfahren (500) ferner aufweist:
Übertragen der zusätzlichen Aufforderung zur Verarbeitung mittels der universellen dialogfähigen künstlichen Intelligenz (135);
Empfangen einer zusätzlichen Antwort; und
Verbessern der Antwort mit der zusätzlichen Antwort.

8. Das Verfahren (500) gemäß einem der Ansprüche 1 bis 7, wobei das Verbessern (515) der Antwort ein Verbessern der Antwort mit anwendungsspezifischen Daten aufweist.

9. Das Verfahren (500) gemäß einem der Ansprüche 1 bis 8, wobei zumindest eine der Maschinenlern-Engine ein Mehrkopf-Maschinenlernmodell aufweist.

10. Das Verfahren (500) gemäß Anspruch 9, wobei das Mehrkopf-Maschinenlernmodell ein Backbone-Netzwerk, das mit gemeinsamen Datensätzen trainiert ist, und eine Mehrzahl von Mehrkopf-Modellen, die mit anwendungsspezifischen Datensätzen trainiert sind, aufweist.

11. Das Verfahren (500) gemäß einem der Ansprüche 1 bis 9, wobei zumindest eine der Maschinenlern-Engines adaptives Multimodell-Schalten einsetzt.

12. Das Verfahren (500) gemäß Anspruch 11, ferner aufweisend zumindest eines der folgenden Merkmale:
wobei das Multimodell-Schalten ein Hopping zwischen einer Mehrzahl von Modellen aufweist;
wobei das Multimodell-Schalten ein paralleles Laufen einer Mehrzahl von Modellen
aufweist;
wobei insbesondere das parallele Laufen einer Mehrzahl von Modellen zumindest eines aufweist von:
(a) Einsetzen einer optimalen Ausgabeauswahlstrategie;
(b) Einsetzen einer Ausgabemehrheitsabstimmungsstrategie;
(c) Einsetzen einer Ausgabeaggregationsstrategie;
(d) Einsetzen einer Modelldelegierungsstrategie; und
wobei das Multimodell-Schalten ein serielles Laufen einer Mehrzahl von Modellen aufweist.

13. Das Verfahren (500) gemäß einem der Ansprüche 1 bis 12, wobei das Verarbeiten mittels der universellen dialogfähigen künstlichen Intelligenz (135) an einer zweiten Vorrichtung aufweist:
Empfangen der verbesserten Chat-Aufforderung von der Vorrichtung (1700);
Empfangen einer zweiten Betriebsinformation über den Netzwerkdienst;
weiteres Verbessern der Chat-Aufforderung unter Verwendung zumindest einer dritten Maschinenlern-Engine basierend zumindest teilweise auf der zweiten Betriebsinformation;
Übertragen der weiteren angereicherten Chat-Aufforderung zur Verarbeitung mittels der universellen dialogfähigen künstlichen Intelligenz (135);
Empfangen einer Antwort, die mittels der universellen dialogfähigen künstlichen Intelligenz (135) erzeugt wird;
Verbessern der Antwort unter Verwendung einer vierten Maschinenlern-Engine; und
Bereitstellen der verbesserten Antwort für die Vorrichtung (1700).

14. Ein nicht-transitorisches computerlesbares Medium (1715), das Anweisungen (1760) aufweist, die, wenn sie mittels eines oder mehrerer Prozessoren (1710) einer Vorrichtung (1700) ausgeführt werden, die Vorrichtung (1700) veranlassen, das Verfahren gemäß einem der Ansprüche 1 bis 13 auszuführen.

15. Eine Vorrichtung (1700), aufweisend:
eine Netzwerkschnittstelle (1735);
einen oder mehrere Prozessoren (1710); und
Logik, wobei die Logik Anweisungen (1760) aufweist, die auf einem nichttransitorischen computerlesbaren Medium gespeichert sind, wobei die Anweisungen (1760), wenn sie mittels des einen oder der mehreren Prozessoren (1710) der Vorrichtung (1700) ausgeführt werden, die Vorrichtung (1700) veranlassen, das Verfahren gemäß einem der Ansprüche 1 bis 13 auszuführen.

## Revendications

1. Procédé (500), comprenant les étapes consistant à :
recevoir (505), au niveau d'un dispositif (1700) comprenant un processeur (1710), une demande d'utilisateur en relation avec un service de réseau en provenance d'un utilisateur ;
recevoir (510), au niveau du dispositif (1700), des informations de fonctionnement sur le service de réseau ;
améliorer (515), à l'aide d'une dispositif (1700), une invite de discussion, en utilisant un premier moteur d'apprentissage automatique, sur la base au moins en partie des informations sur les opérations et de la demande d'utilisateur ;
transmettre (530), à l'aide du dispositif (1700), l'invite de discussion enrichie pour traitement par une intelligence artificielle conversationnelle à usage général (135) ;
recevoir (535), à l'aide du dispositif (1700), une réponse générée par l'intelligence artificielle conversationnelle à usage général (135) ;
améliorer (540), à l'aide du dispositif (1700), la réponse en utilisant un deuxième moteur d'apprentissage automatique ; et
fournir (550), à partir du dispositif (1700), la réponse améliorée pour présentation à l'utilisateur.

2. Procédé (500) selon la revendication 1, dans lequel les informations sur les opérations comprennent des informations de performance concernant l'équipement de locaux de client (115) associé à l'utilisateur, et dans lequel le procédé (500) comprend en outre une modification d'une configuration de l'équipement de locaux de client (115), sur la base au moins en partie de la réponse améliorée, pour améliorer les performances de l'équipement de locaux de client (115).

3. Procédé (500) selon la revendication 1 ou 2, dans lequel le dispositif (1700) est un équipement de locaux de client (115) dans un réseau à large bande.

4. Procédé (500) selon la revendication 3, dans lequel la réception (505) d'une demande d'utilisateur comprend la réception de la demande d'utilisateur à partir d'un autre dispositif.

5. Procédé (500) selon la revendication 4, dans lequel l'autre dispositif est un équipement de locaux de client (115) dans un réseau à large bande.

6. Procédé (500) selon l'une quelconque des revendications 1 à 5, dans lequel l'amélioration (515) de l'invite de discussion comprend un enrichissement de l'invite avec des informations opérationnelles ; et la réponse est une réponse enrichie.

7. Procédé (500) selon l'une quelconque des revendications 1 à 6, dans lequel l'amélioration (515) de l'invite de discussion comprend la génération (525) d'une invite supplémentaire ; et
le procédé (500) comprenant en outre les étapes consistant à :
transmettre l'invite supplémentaire pour traitement par l'intelligence artificielle conversationnelle à usage général (135) ;
recevoir une réponse supplémentaire ; et
augmenter la réponse avec la réponse supplémentaire.

8. Procédé (500) selon l'une quelconque des revendications 1 à 7, dans lequel l'amélioration (515) de la réponse comprend l'amélioration de la réponse avec des données spécifiques à une application.

9. Procédé (500) selon l'une quelconque des revendications 1 à 8, dans lequel au moins l'un des moteurs d'apprentissage automatique comprend un modèle d'apprentissage automatique à têtes multiples.

10. Procédé (500) selon la revendication 9, dans lequel le modèle d'apprentissage automatique à têtes multiples comprend un réseau de base formé avec des ensembles de données communs et une pluralité de modèles à têtes multiples entraînés avec des ensembles de données spécifiques à une application.

11. Procédé (500) selon l'une quelconque des revendications 1 à 9, dans lequel au moins l'un des moteurs d'apprentissage automatique utilise une commutation multi-modèle adaptative.

12. Procédé (500) selon la revendication 11, comprenant en outre au moins une des caractéristiques suivantes :
dans lequel la commutation multi-modèle comprend un saut entre une pluralité de modèles ;
dans lequel la commutation multi-modèle comprend l'exécution d'une pluralité de modèles en parallèle ;
dans lequel, en particulier, l'exécution d'une pluralité de modèles en parallèle comprend au moins l'une des étapes suivantes consistant à :
(a) utiliser une stratégie de sélection de sortie optimale ;
(b) utiliser une stratégie de vote à la majorité de sortie ;
(c) utiliser une stratégie d'agrégation de sortir ;
(d) utiliser une stratégie de délégation de modèle ; et
dans lequel la commutation multi-modèle comprend l'exécution d'une pluralité de modèles en série.

13. Procédé (500) selon l'une quelconque des revendications 1 à 12, dans lequel le traitement par l'intelligence artificielle conversationnelle à usage général (135) comprend, au niveau d'un second dispositif les étapes consistant à :
recevoir l'invite de discussion améliorée depuis le dispositif (1700) ;
recevoir des secondes informations d'opérations sur le service de réseau ;
améliorer davantage l'invite de discussion, en utilisant au moins un troisième moteur d'apprentissage automatique, sur la base au moins en partie des secondes informations d'opérations ;
transmettre l'invite de discussion enrichie davantage pour traitement par l'intelligence artificielle conversationnelle à usage général (135) ;
recevoir une réponse générée par l'intelligence artificielle conversationnelle à usage général (135) ;
améliorer la réponse en utilisant un quatrième moteur d'apprentissage automatique ; et
fournir la réponse améliorée au dispositif (1700).

14. Support lisible par ordinateur non transitoire (1715) comprenant des instructions (1760) qui, lorsqu'elles sont exécutées par un ou plusieurs processeurs (1710) d'un dispositif (1700), amènent le dispositif (1700) à exécuter le procédé selon l'une quelconque des revendications 1 à 13.

15. Dispositif (1700), comprenant :
une interface réseau (1735) ;
un ou plusieurs processeurs (1710) ; et
une logique, la logique comprenant des instructions (1760) stockées sur un support lisible par ordinateur non transitoire, dans lequel les instructions (1760), lorsqu'elles sont exécutées par les un ou plusieurs processeurs (1710) du dispositif (1700), amènent le dispositif (1700) à exécuter le procédé selon l'une quelconque des revendications 1 à 13.
